(19) Europäisches Patentamt / European Patent Office / Office européen des brevets

(11) **EP 4 582 489 A1**

(12) **EUROPEAN PATENT APPLICATION**
published in accordance with Art. 153(4) EPC

(43) Date of publication:
09.07.2025 Bulletin 2025/28

(21) Application number: 23859863.5

(22) Date of filing: 14.07.2023

(51) International Patent Classification (IPC):
$C08L\ 101/00^{(2006.01)}$    $C08F\ 2/18^{(2006.01)}$
$C08F\ 2/44^{(2006.01)}$    $C08F\ 212/36^{(2006.01)}$
$C08K\ 7/22^{(2006.01)}$

(52) Cooperative Patent Classification (CPC):
C08F 2/18; C08F 2/44; C08F 212/36; C08K 7/22;
C08L 101/00

(86) International application number:
PCT/JP2023/026013

(87) International publication number:
WO 2024/048093 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.08.2022 JP 2022136909

(71) Applicant: Zeon Corporation
Tokyo 100-8246 (JP)

(72) Inventor: MORIMURA, Miki
Tokyo 100-8246 (JP)

(74) Representative: Kraus & Lederer PartGmbB
Thomas-Wimmer-Ring 15
80539 München (DE)

(54) **HOLLOW PARTICLES, RESIN COMPOSITION, AND MOLDED BODY**

(57) To provide hollow particles having a decreased dielectric dissipation factor and improved performance stability. Hollow particles comprising a shell, which contains at least one kind of polymer, and a hollow portion surrounded by the shell, wherein a content of a non-crosslinkable monomer unit in 100% by mass of all monomer units forming a whole of the polymer contained in the shell, is 15% by mass or more and 60% by mass or less, and wherein the hollow particles have a dielectric dissipation factor of $5.00 \times 10^{-4}$ or less at a frequency of 10 GHz.

[FIG. 1]

EP 4 582 489 A1

**Description**

Technical Field

The present disclosure relates to hollow particles, a resin composition comprising the hollow particles and a molded body comprising the hollow particles.

Background Art

Hollow particles (hollow resin particles) have a hollow in their interior. Accordingly, they are added and used in resins, coating materials, various kinds of molded bodies and so on, for the purpose of weight reduction, heat insulation, a decrease in permittivity, etc. Their application covers a wide range of fields, such as automobiles, bicycles, aviation, electric, electronics, architecture, household appliances, containers, stationery products, tools and footwear.

In the electric or electronics field or the like, there is an attempt to add hollow particles to insulation materials for the purpose of decreasing the permittivity and dielectric dissipation factor of the insulation materials.

For example, Patent Document 1 discloses, as hollow crosslinking resin particles for use in organic insulation materials having low permittivity, hollow crosslinking resin particles obtained by polymerizing a crosslinking monomer (1% by weight to 100% by weight) and a non-crosslinking monomer (0% by weight to 99% by weight) (the total of the crosslinking and non-crosslinking monomers is 100% by weight), which have an average particle diameter of from 0.03 $\mu$m to 10 $\mu$m and an average concentration of metal ions present therein of 50 ppm or less. The hollow crosslinking resin particles of Patent Document 1 are produced by dispersing the monomers in water by use of an emulsifier (a surfactant) and initiating seed polymerization.

Patent Document 2 discloses hollow particles obtained by dispersing an organic mixed solution in an aqueous solution containing a surfactant, and subjecting the mixed solution to suspension polymerization, wherein the organic mixed solution contains an aromatic crosslinkable monomer (a), an aromatic monofunctional monomer (b), a (meth) acrylic ester-based monomer (c) having a specific structure, a side-chain crystalline polyolefin, a polymerization initiator and an organic solvent.

Patent Document 3 discloses hollow particles which are obtained by dispersing an oil phase in an aqueous phase that is a sparingly water-soluble metal hydroxide colloid, and subjecting the obtained dispersion to suspension polymerization, wherein the oil phase contains a hydrocarbon monomer in which a content of a crosslinkable monomer is 70% by mass or more, a hydrocarbon solvent containing 5 to 8 carbon atoms, and a polymerization initiator.

Citation List

Patent Documents

    Patent Document 1: Japanese Patent Application Laid-Open (JP-A) No. 2000-313818
    Patent Document 2: International Publication No. WO2021/085189
    Patent Document 3: International Publication No. WO2022/092076

Summary

Technical Problem

Hollow particles which are added for the purpose of decreasing the dielectric dissipation factor of various kinds of materials, are desired to have a lower dielectric dissipation factor.

Hollow particles in which the shell contains a polymer have the following problems: the dielectric property of the hollow particles is likely to deteriorate in a high humidity environment or after a long-term storage and so on, and an abnormality such as ion migration is likely to occur in an electronic circuit board containing the hollow particles. Accordingly, there is a demand for hollow particles excellent in performance stability.

An object of the present disclosure is to provide hollow particles in which the dielectric dissipation factor is decreased, and the performance stability is improved.

Another object of the present disclosure is to provide a resin composition and a molded body in both of which, because of containing the hollow particles, a reduction in the performance stability is suppressed, while the dielectric dissipation factor is decreased.

Solution to Problem

The inventor of the present disclosure found the following: in hollow particles comprising a shell which contains a polymer, a decrease in dielectric dissipation factor and an improvement in performance stability can be achieved when the content of a non-crosslinkable monomer unit contained in the shell is adjusted within a specific range. Finally, the inventor achieved the present disclosure, based on this finding.

According to the present disclosure, there are provided hollow particles comprising a shell, which contains at least one kind of polymer, and a hollow portion surrounded by the shell,

wherein a content of a non-crosslinkable monomer unit in 100% by mass of all monomer units forming a whole of the polymer contained in the shell, is 15% by mass or more and 60% by mass or less, and
wherein the hollow particles have a dielectric dissipation factor of $5.00 \times 10^{-4}$ or less at a frequency of 10 GHz.

In the hollow particles according to the present disclosure, a residual double bond ratio of the whole polymer contained in the shell is preferably 15.0% or less.

In the hollow particles according to the present disclosure, the shell may comprise a structure derived from a polymer of a non-crosslinkable monomer.

The polymer of the non-crosslinkable monomer is preferably at least one kind of polymer selected from the group consisting of a polymer comprising an aromatic monovinyl monomer unit, and a polymer comprising an aromatic monovinyl monomer unit and a diene-based monomer unit.

In the hollow particles according to the present disclosure, the hollow particles preferably have a relative permittivity of 1.00 or more and 1.40 or less at a frequency of 10 GHz.

In the hollow particles according to the present disclosure, the whole polymer contained in the shell is preferably a hydrocarbon polymer.

In the hollow particles according to the present disclosure, the hollow particles preferably have a void ratio of 70% or more.

In the hollow particles according to the present disclosure, a percentage of particles having a circularity of 0.85 or less is preferably 5% by mass or less.

In the hollow particles according to the present disclosure, the hollow particles preferably have a volume average particle diameter of 1.0 $\mu$m or more and 10.0 $\mu$m or less.

In the hollow particles according to the present disclosure, the hollow particles preferably have a particle size distribution (volume average particle diameter (Dv) / number average particle diameter (Dn)) of 1.00 or more and 1.40 or less.

According to the present disclosure, there is also provided a resin composition comprising the hollow particles of the present disclosure and a matrix resin.

According to the present disclosure, there is also provided a molded body comprising the hollow particles of the present disclosure and a solidified product of a matrix resin.

Advantageous Effects of Invention

According to the present disclosure as described above, the hollow particles in which the dielectric dissipation factor is lower than conventional hollow particles and the performance stability is improved, can be provided.

Also, the present disclosure can provide the resin composition and the molded body in both of which, because of containing the hollow particles, a reduction in the performance stability is suppressed while the dielectric dissipation factor is decreased.

Brief Description of Drawing

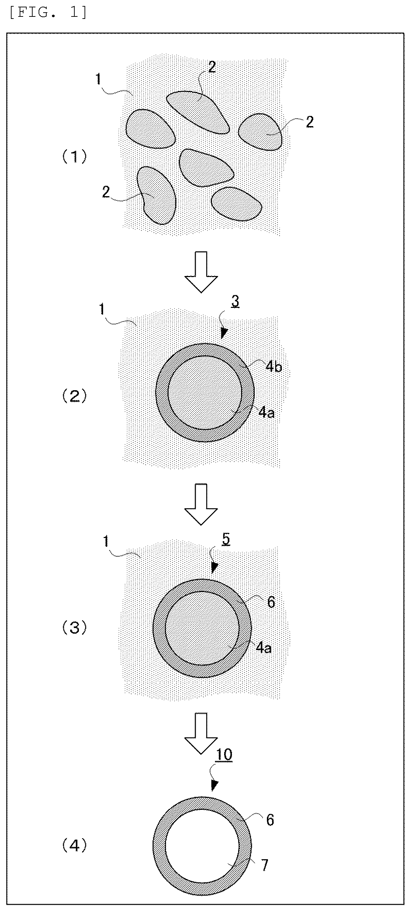

[FIG. 1] FIG. 1 is a diagram illustrating an example of the method for producing the hollow particles of the present disclosure.

Description of Embodiments

The hollow particles of the present disclosure are hollow particles comprising a shell, which contains at least one kind of polymer, and a hollow portion surrounded by the shell,

wherein a content of a non-crosslinkable monomer unit in 100% by mass of all monomer units forming a whole of the polymer contained in the shell, is 15% by mass or more and 60% by mass or less, and

wherein the hollow particles have a dielectric dissipation factor of $5.00 \times 10^{-4}$ or less at a frequency of 10 GHz.

The polymer contained in the shell of the hollow particles of the present disclosure, is composed of monomer units. In the present disclosure, the term "monomer unit" is a constitutional unit corresponding to a polymerizable monomer. The polymerizable monomer is a compound containing a functional group which can initiate a polymerization reaction (hereinafter, the functional group may be simply referred to as "polymerizable functional group").

Each of the monomer units contained in the shell of the hollow particles of the present disclosure, may be derived from a polymerizable monomer contained in a shell material, or may be derived from the monomer units forming a preliminarily prepared polymer contained in the shell material. In the present disclosure, a material of the polymer contained in the shell is referred to as "shell material", and the polymerization initiator is not contained in the shell material. Also in the present disclosure, the term "shell material composition" is a composition containing the shell material. The shell material used to produce the hollow particles of the present disclosure contains at least the polymerizable monomer. In addition to the polymerizable monomer, the shell material may contain the polymer obtained by preliminarily polymerizing polymerizable monomers.

The shell of the hollow particles of the present disclosure is formed by addition polymerization of the polymerizable monomer in the shell material. Meanwhile, the preliminarily prepared polymer contained in the shell material may be a polymer obtained by a known polymerization reaction such as addition polymerization, oxidation polymerization, polycondensation reaction and ring-opening polymerization or by a combination thereof. Accordingly, each of the monomer units contained in the shell of the hollow particles of the present disclosure may be a constitutional unit formed by another polymerization reaction initiated in advance, while it is typically a constitutional unit formed by an addition polymerization reaction. In the present disclosure, the functional group which can initiate addition polymerization is not particularly limited. It is typically a polymerizable functional group containing an ethylenically unsaturated bond.

In the present disclosure, a polymerizable monomer containing only one polymerizable functional group is referred to as "non-crosslinkable monomer; moreover, a polymerizable monomer containing two or more polymerizable functional groups is referred to as "crosslinkable monomer". The polymerizable functional group takes account of only a functional group appropriate for a polymerization reaction. The crosslinkable monomer can form a crosslink in the polymer by a polymerization reaction. In general, the non-crosslinkable monomer does not form a crosslink in the polymer.

The hollow particles of the present disclosure are hollow particles having a low dielectric dissipation factor, which is obtained by using the shell material such that the content of the non-crosslinkable monomer unit contained in the shell is within the above-specified range, and setting the condition of the polymerization reaction for forming the shell to a higher-temperature and longer-time condition than ever before.

The dielectric dissipation factor is the degree that a part of the energy is turned into heat and lost when an electric field is applied. In the hollow particles, the dielectric dissipation factor can be decreased by suppressing the molecular motion of the shell, thereby reducing energy loss. In the polymer which is the main component of the shell of the hollow particles of the present disclosure, the molecular motion is likely to be active at the terminals of the main or side chain, each of which contains a polymerizable unsaturated double bond. Accordingly, decreasing the number of the terminals of the polymer is effective in suppressing the molecular motion of the shell. Suppressing the branching of the polymer and accelerating the crosslinking reaction of the polymerizable unsaturated double bond at each of the terminals of the polymer (hereinafter, it may be simply referred to as "crosslinking reaction at the terminal") are effective in decreasing the number of the terminals of the polymer contained in the shell.

In the present disclosure, it is presumed that by using the shell material such that the content of the non-crosslinkable monomer unit contained in the shell is within the above-specified range, the branching of the polymer is suppressed, and the crosslinking reaction at each terminal is accelerated. The reason for the acceleration of the crosslinking reaction at the terminal is presumed to be because the suppression of the branching of the polymer causes a reduction in steric hindrance and facilitates the reaction of the polymer with another polymer.

In the hollow particles of the present disclosure, it is presumed that the branching of the polymer is suppressed and the number of the terminals of the polymer, each of which contains the polymerizable unsaturated double bond, is decreased, thereby suppressing the molecular motion of the shell; moreover, entanglement of the polymers forming the shell is caused, thereby further suppressing the molecular motion of the shell.

An air layer has a dielectric dissipation factor of 0. Accordingly, as the percentage of the air layer in the hollow particles increases, the dielectric dissipation factor of the hollow particles decreases. However, in the case of using the shell material such that the content of the non-crosslinkable monomer unit contained in the shell is within the above-specified range, concaves are likely to be formed on the hollow particles thus obtained. Therefore, it is difficult to increase the percentage of the air layer by increasing the void ratio of the hollow particles. Meanwhile, in the present disclosure, it has been found that even in the case of using the shell material such that the content of the non-crosslinkable monomer unit contained in the shell is within the above-specified range, the formation of the concaves on the particles is suppressed by performing the polymerization reaction for forming the shell at a higher temperature and for a longer time than ever before. This is presumed to be because, in the case of using the shell material such that the content of the non-crosslinkable monomer unit is within the above range, the branching of the polymer is suppressed even when the polymerization temperature is set to a high temperature; therefore, the speed of polymer deposition in the shell formation appropriately decreases, and the shell formation uniformly proceeds.

As just described, in the hollow particles of the present disclosure, the molecular motion of the shell is suppressed; the formation of the concaves on the particles is suppressed; and the hollow particles can have a sufficient void ratio, thereby achieving a low dielectric dissipation factor of $5.0 \times 10^{-4}$ or less at a frequency of 10 GHz.

In addition, since the hollow particles of the present disclosure has the sufficient void ratio, they have a low relative permittivity as well as the low dielectric dissipation factor, and they have excellent dielectric property. In the present disclosure, it is considered that the lower the relative permittivity and dielectric dissipation factor, the better the dielectric property.

Since the hollow particles of the present disclosure have excellent performance stability, the dielectric property of the hollow particles is less likely to deteriorate even in a high humidity environment or after a long-term storage and so on, and ion migration is less likely to occur in an electronic circuit board containing the hollow particles of the present disclosure. The reason for the poor performance stability of conventional hollow particles is presumed to be because oxidation degradation of the polymer contained in the shell is caused by the influence of the ozone in the air. The oxidation degradation of the polymer is caused by ozone oxidation of the polymerizable unsaturated double bond contained in the polymer. More specifically, an oxidation reaction is caused when oxygen in the air is added to a carbon radical produced by hydrogen abstraction, the hydrogen being located at the $\beta$ position of the unsaturated double bond having a small binding force. It is thought that by the oxidation degradation of the polymer, the content of an oxygen atom in the shell is increased, resulting in a deterioration of the dielectric property of the hollow particles. Also, it is presumed that as a result of the increase in the content of the oxygen atom in the shell, the shell is likely to absorb moisture; in the electronic circuit board containing the hollow particles, accordingly, by the water in the shell of the moisture-absorbing hollow particles, the metal of the anode of the wiring pattern is ionized and eluted; the eluted metal ion migrates between the electrodes or wirings and is produced as a metal in the cathode or wirings, thereby causing ion migration; and a short-circuit fault is caused, accordingly. It is thought that since the polymerizable unsaturated double bond contained in the polymer can be ozone-oxidized, oxidation degradation of the shell is more likely to proceed as the amount of the polymerizable unsaturated double bond contained in the polymer increases. Also, the above-described oxidation gradation of the shell is likely to proceed in a high humidity environment in which the air contains large amounts of water, or during a long-term storage with long exposure to air; moreover, the oxidation reaction is likely to proceed by heat. Accordingly, the deterioration of the dielectric property of the hollow particles and an abnormality in the electronic circuit board containing the hollow particles are likely to occur in a high humidity or high temperature environment or after a long-term storage.

Meanwhile, in the polymer contained in the shell of the hollow particles of the present disclosure, as described above, the number of the terminals of the main or side chain containing the polymerizable unsaturated double bond is small; therefore, the amount of the polymerizable unsaturated double bond is decreased, and the shell is less likely to cause oxidation degradation even in a high humidity or high temperature environment or after a long-term storage and so on. As a result, the hollow particles of the present disclosure are excellent in performance stability.

In the present disclosure, the hollow particles are considered to have better performance stability when the properties of the hollow particles themselves are less likely to change, or when the properties of the material containing the hollow particles are less likely to change due to the hollow particles.

Heat resistance is required of hollow particles used in electronic materials such as a printed circuit board, since they are exposed to high temperature in a printed circuit board component mounting step. However, conventional hollow particles are likely to be decomposed at high temperature and to have insufficient heat resistance, since many terminals of the polymer, which contain the polymerizable unsaturated double bond, remain in the shell. Meanwhile, the hollow particles of the present disclosure have excellent heat resistance, since the number of the terminals of the polymer, which contain the polymerizable unsaturated double bond, is small.

In the process of producing the hollow particles of the present disclosure, uniform formation of the shell of the particles is likely to proceed; therefore, hollow particles including a small percentage of irregular-shaped particles can be obtained. The irregular-shaped particles are particles having a low circularity, and they are typically particles with deformation (e.g. a dent) or a crack. Such irregular-shaped hollow particles have a low void ratio compared to spherical hollow particles; therefore, they are poor in dielectric property. Accordingly, the dielectric property of the hollow particles can be improved by decreasing the percentage of the irregular-shaped particles included in the hollow particles.

Also, the irregular-shaped particles have the following problem: compared to spherical particles, the irregular-shaped particles are poor in dispersibility since they are likely to aggregate when dispersed in the matrix resin. In addition, the irregular-shaped particles have the following problem: they are poor in pressure resistance compared to spherical particles, since external pressure is likely to be locally applied thereto. When the irregular-shaped particles are dispersed in the matrix resin, aggregates are likely to be formed; external pressure is likely to be applied to the aggregates; and the pressure resistance further deteriorates, accordingly. Therefore, the dispersibility and pressure resistance of the hollow particles can be improved by decreasing the percentage of the irregular-shaped particles included in the hollow particles.

In general, in the case of using the shell material such that the content of the non-crosslinkable monomer unit contained in the shell is equal to or more than the lower limit value, the shell of the hollow particles thus obtained is likely to swell. However, even in the above case, by performing the polymerization reaction at a higher temperature and for a longer time than ever before, a shell which is less likely to swell can be formed. By the use of the shell material such that the content of the non-crosslinkable monomer unit contained in the shell is equal to or more than the lower limit value, a shell which is likely to swell is likely to be formed since the number of parts having a low crosslink density increases. Meanwhile, it is presumed that performing the polymerization reaction at a higher temperature and for a longer time than ever before, results in a formation of a shell which is less likely to swell due to the high crosslink density of the shell. If the shell of the hollow particles swells when dispersing the hollow particles in a resin varnish containing the matrix resin and a solvent, there is a possibility that the matrix resin or the solvent penetrates the interior of the hollow particles to decrease the air layer inside the particles, making it difficult to retain the dielectric property. Meanwhile, the hollow particles of the present disclosure are those in which the swelling of the shell is suppressed, and when they are dispersed in the resin varnish, the matrix resin, the solvent or the like is less likely to penetrate the interior of the particles.

Hereinafter, an example of the method for producing the hollow particle of the present disclosure will be described. Then, the hollow particles of the present disclosure will be described in more detail.

In the present disclosure, "to" which shows a numerical range is used to describe a range in which the numerical values described before and after "to" indicate the lower limit value and the upper limit value.

1. Method for producing the hollow particles

The hollow particles of the present disclosure are typically produced by the production method described below, which is based on the suspension polymerization method.

As the hollow particle production method of the present disclosure, for example, there is provided a method comprising:

preparing a mixture liquid containing a shell material, a hydrophobic solvent, a polymerization initiator, a dispersion stabilizer and an aqueous medium,
suspending the mixture liquid to prepare a suspension in which droplets of a shell material composition containing the shell material, the hydrophobic solvent and the polymerization initiator are dispersed in the aqueous medium, and
subjecting the suspension to a polymerization reaction to prepare a precursor composition comprising precursor particles comprising a shell, which contains a polymer, and a hollow portion surrounded by the shell and including the hydrophobic solvent in the hollow portion.

In the suspension polymerization method, by carrying out the suspension treatment of the mixture liquid containing the shell material, the hydrophobic solvent, the polymerization initiator, the dispersion stabilizer and the aqueous medium, phase separation occurs between the shell material and the hydrophobic solvent. Accordingly, the suspension in which droplets of the shell material composition are dispersed in the aqueous medium, the droplets having a distribution structure such that the shell material is distributed on the surface side and the hydrophobic solvent is distributed in the center, is prepared. By subjecting the suspension to a polymerization reaction, a polymer starts to precipitate on the surface of the droplets of the shell material composition, and the polymerization reaction is further developed. Accordingly, the surface of the droplets is cured to form the shell, thereby obtaining the hollow particles having the hollow portion filled with the hydrophobic solvent.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

The above-described production method includes the steps of preparing the mixture liquid, preparing the suspension and subjecting the suspension to a polymerization reaction. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (for example, the mixture liquid may be suspended while adding the materials for the mixture liquid).

A preferred embodiment of the method for producing the hollow particles of the present disclosure may be a production method including the following steps.

(1) Mixture liquid preparation step

The mixture liquid preparation step includes preparing a mixture liquid containing a shell material, a hydrophobic solvent, a polymerization initiator, a dispersion stabilizer and an aqueous medium.

(2) Suspension step

The suspension step includes suspending the mixture liquid to prepare a suspension in which droplets of a shell material composition containing the shell material, the hydrophobic solvent and the polymerization initiator are dispersed in the aqueous medium.

(3) Polymerization step

The polymerization step includes subjecting the suspension to a polymerization reaction to prepare a precursor composition comprising precursor particles comprising a shell, which contains a polymer, and a hollow portion surrounded by the shell and including the hydrophobic solvent in the hollow portion.

(4) Solvent removal step

The solvent removal step includes removing the included hydrophobic solvent from the precursor particles to obtain the hollow particles.

FIG. 1 is a schematic diagram showing an example of the production method of the present disclosure. The diagrams (1) to (4) in FIG. 1 correspond to the steps (1) to (4) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the shell material, the hydrophobic solvent and the polymerization initiator.

The diagram (2) of FIG. 1 is a schematic cross-sectional view showing an embodiment of the suspension in the suspension step. The suspension contains the aqueous medium 1 and droplets 3 of the shell material composition dispersed in the aqueous medium 1. The droplets 3 of the shell material composition contain the shell material, the hydrophobic solvent and the polymerization initiator, and their distribution in the droplets is not uniform. The droplets 3 of the shell material composition have the following structure: phase separation occurs between a hydrophobic solvent 4a and a material 4b containing the shell material and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition obtained by the polymerization step, which contains the precursor particles which include the hydrophobic solvent in the hollow portion. The precursor composition contains the aqueous medium 1 and precursor particles 5 which include the hydrophobic solvent 4a in the hollow portion and which are dispersed in the aqueous medium 1. A shell 6 forming the outer surface of the precursor particles 5 is formed by polymerization of the polymerizable monomer contained in the droplets 3 of the shell material composition.

The diagram (4) of FIG. 1 is a schematic cross-sectional view showing an embodiment of the hollow particles after the solvent removal step. The diagram (4) of FIG. 1 shows a state where the aqueous medium 1 and the hydrophobic solvent 4a have been removed from the state shown in the diagram (3) of FIG. 1. By the removal of the included hydrophobic solvent from the precursor particles, hollow particles 10 having a gas-filled hollow portion 7 in the interior of the shell 6, are obtained.

Hereinafter, the four steps described above and other steps will be described in order.

(1) Mixture liquid preparation step

The mixture liquid preparation step includes preparing a mixture liquid containing a shell material, a hydrophobic solvent, a polymerization initiator, a dispersion stabilizer and an aqueous medium. The mixture liquid may further contain other materials to the extent that does not impair the effects of the present disclosure.

The materials for the mixture liquid will be described in the following order: (A) the shell material, (B) the hydrophobic solvent, (C) the polymerization initiator, (D) the dispersion stabilizer and (E) the aqueous medium.

(A) Shell material

The shell material contains at least a polymerizable monomer, and it may further contain a preliminarily polymerized polymer. The polymer used as the shell material may contain or may be free of a polymerizable functional group.

The shell material contains at least a crosslinkable monomer as the polymerizable monomer. In addition, the shell material preferably contains at least one selected from the group consisting of a non-crosslinkable monomer and a polymer of a non-crosslinkable monomer, and the shell material more preferably contains a crosslinkable monomer and a non-crosslinkable monomer as the polymerizable monomer. The crosslinkable monomer contained in the shell material becomes a crosslinkable monomer unit in the shell, and the non-crosslinkable monomer contained in the shell material becomes a non-crosslinkable monomer unit in the shell. In the polymer contained in the shell material, the non-crosslinkable monomer unit and crosslinkable monomer unit forming the polymer become the non-crosslinkable monomer unit and crosslinkable monomer unit of the shell, respectively.

In the present disclosure, a polymerizable monomer composed of the elements carbon and hydrogen is referred to as "hydrocarbon monomer", and a polymerizable monomer containing a (meth)acryloyl group as a polymerizable functional group is referred to as "acrylic monomer".

Also in the present disclosure, (meth)acrylate means each of acrylate and methacrylate; (meth)acryl means each of acryl and methacryl; and (meth)acryloyl means each of acryloyl and methacryloyl.

As the crosslinkable monomer, a compound containing two or more addition-polymerizable functional groups is used. As the crosslinkable monomer, examples include, but are not limited to, the following: a crosslinkable hydrocarbon monomer such as an aromatic divinyl monomer (e.g., divinylbenzene, divinylbiphenyl and divinylnaphthalene) and a diene monomer (e.g., a linear or branched diolefin such as butadiene, isoprene, 2,3-dimethylbutadiene, pentadiene and hexadiene, and an alicyclic diolefin such as dicyclopentadiene, cyclopentadiene and ethylidene tetracyclododecene); a crosslinkable acrylic monomer such as allyl (meth)acrylate, vinyl (meth)acrylate, ethylene glycol di(meth)acrylate, diethylene glycol di(meth)acrylate, pentaerythritol di(meth)acrylate, tricyclodecane dimethanol di(meth)acrylate, 3-(meth)acryloyloxy-2-hydroxypropyl (meth)acrylate, trimethylolpropane tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, dipentaerythritol poly(meth)acrylate, and ethoxylates thereof; and a crosslinkable allyl monomer such as diallyl phthalate. These crosslinkable monomers may be used alone or in combination of two or more.

From the viewpoint of reactivity, the crosslinkable monomer is preferably at least one selected from the group consisting of a crosslinkable hydrocarbon monomer, a crosslinkable acrylic monomer and a crosslinkable allyl-based monomer. From the viewpoint of decreasing the dielectric dissipation factor of the hollow particles and improving the performance stability, the crosslinkable monomer is more preferably a crosslinkable hydrocarbon monomer, still more preferably an aromatic divinyl monomer, and even more preferably divinylbenzene.

In the present disclosure, the content of the crosslinkable monomer in 100% by mass of the shell material is preferably 40% by mass or more, more preferably 45% by mass or more, still more preferably 50% by mass or more, and even more preferably 60% by mass or more, from the point of view that the strength of the shell improves and the hollow particles are likely to keep a high void ratio. On the other hand, the content of the crosslinkable monomer in 100% by mass of the shell material is preferably 85% by mass or less, more preferably 80% by mass or less, still more preferably 75% by mass or less, and even more preferably 65% by mass or less, from the viewpoint of decreasing the dielectric dissipation factor of the hollow particles and improving the performance stability.

In the present disclosure, the raw material for the crosslinkable monomer unit in the shell preferably contains the crosslinkable monomer.

As the non-crosslinkable monomer, a compound containing only one addition-polymerizable functional group is used. As the non-crosslinkable monomer, examples include, but are not limited to, the following: a non-crosslinkable hydrocarbon monomer; a non-crosslinkable acrylic monomer such as methyl (meth)acrylate, ethyl (meth)acrylate, butyl (meth)acrylate, 2-ethylhexyl (meth)acrylate, lauryl (meth)acrylate), t-butylaminoethyl (meth)acrylate, glycidyl (meth)acrylate, 2-hydroxyethyl (meth)acrylate, 2-aminoethyl (meth)acrylate, (meth)acrylic acid, (meth)acrylamide, N-methylol (meth)acrylamide, N-butoxymethyl (meth)acrylamide, methoxypolyethylene glycol (meth)acrylate, ethoxypolyethylene glycol (meth)acrylate, propoxypolyethylene glycol (meth)acrylate, butoxypolyethylene glycol (meth)acrylate, hexaoxypolyethylene glycol (meth)acrylate, octoxypolyethylene glycol polypropylene glycol (meth)acrylate, lauroxypolyethylene glycol (meth)acrylate, stearoxypolyethylene glycol (meth)acrylate, phenoxypolyethylene glycol polypropylene glycol (meth)acrylate, polyethylene glycol mono(meth)acrylate, polypropylene glycol mono (meth) acrylate, polyethylene glycol propylene glycol mono(meth)acrylate, polyethylene glycol tetramethylene glycol (meth)acrylate, propylene glycol polybutylene glycol mono(meth)acrylate, and monoethylene glycol mono (meth) acrylate; a carboxylic acid vinyl ester monomer such as vinyl acetate; a halogenated aromatic vinyl monomer such as halogenated styrene; a vinyl halide monomer such as vinyl chloride; a vinylidene halide monomer such as vinylidene chloride; and vinylpyridine.

As the non-crosslinkable hydrocarbon monomer, examples include, but are not limited to, an aromatic monovinyl monomer such as styrene, vinyl toluene, $\alpha$-methylstyrene, p-methylstyrene, ethylvinylbenzene, ethylvinylbiphenyl and ethylvinylnaphthalene, and a monoolefin monomer such as a linear or branched monoolefin (e.g., ethylene, propylene and butylene) and an alicyclic monoolefin (e.g., vinylcyclohexane, norbornene and tricyclododecene).

These non-crosslinkable monomers may be used alone or in combination of two or more.

From the viewpoint of decreasing the dielectric dissipation factor of the hollow particles and improving the performance stability, the non-crosslinkable monomer is preferably a non-crosslinkable hydrocarbon monomer, more preferably at least one selected from the group consisting of an aromatic monovinyl monomer and a monoolefin monomer, still more preferably an aromatic monovinyl monomer, and even more preferably at least one selected from the group consisting of styrene and ethylvinylbenzene.

The polymer used as the shell material is preferably the polymer of the non-crosslinkable monomer. In the present disclosure, the polymer of the non-crosslinkable monomer is only required to be a polymer containing a non-crosslinkable monomer unit. For example, a polymer comprising a non-crosslinkable monomer unit or a polymer comprising a non-crosslinkable monomer unit and a diene-based monomer unit is preferably used. That is, the crosslinkable monomer used in the polymer of the non-crosslinkable monomer is preferably a diene-based monomer. When the polymer of the non-crosslinkable monomer contains a crosslinkable monomer unit, the content of the non-crosslinkable monomer unit in the polymer is preferably 20% by mass or more.

The polymer of the non-crosslinkable monomer may be a polymer obtained by a conventionally-known polymerization reaction. As the polymer of the non-crosslinkable monomer obtained by addition polymerization, examples include, but are not limited to, an addition polymer of the above-described non-crosslinkable monomer and an addition polymer of the above-described non-crosslinkable and crosslinkable monomers. As the polymer of the non-crosslinkable monomer obtained by a polymerization reaction other than addition polymerization, examples include, but are not limited to, polyphenylene ether and modified polyphenylene ether. The above-described polymer of the non-crosslinkable monomer may be either a homopolymer or a copolymer.

From the viewpoint of decreasing the dielectric dissipation factor of the hollow particles and improving the performance stability, the polymer of the non-crosslinkable monomer is preferably at least one kind of polymer selected from the group consisting of a polymer comprising an aromatic monovinyl monomer unit, and a polymer comprising an aromatic monovinyl monomer unit and a diene-based monomer unit.

As the polymer comprising the aromatic monovinyl monomer unit, a polystyrene is particularly preferred.

As the polymer comprising the aromatic monovinyl monomer unit and the diene-based monomer unit, examples include, but are not limited to, a block copolymer including an aromatic monovinyl polymer block and a conjugated diene polymer block, such as a block copolymer of styrene and butadiene (e.g., a styrenebutadiene-styrene block copolymer (SBS)), a block copolymer of styrene and isoprene (e.g., a styrene-isoprene-styrene block copolymer (SIS)) and a block copolymer of styrene and dicyclopentadiene. Of them, a styrene-isoprene-styrene block copolymer (SIS) is particularly preferred.

In the polymer of the non-crosslinkable monomer, at least a part of the unsaturated bonds may be subjected to a hydrogenation reaction.

The polymer of the non-crosslinkable monomer may contain or may be free of a polymerizable functional group.

The weight average molecular weight of the polymer of the non-crosslinkable monomer is not particularly limited. From the viewpoint of decreasing the dielectric dissipation factor of the hollow particles and improving the performance stability, the weight average molecular weight of the polymer of the non-crosslinkable monomer is preferably 10000 or more, and more preferably 100000 or more. On the other hand, the weight average molecular weight is preferably 1000000 or less, and more preferably 500000 or less.

In the present disclosure, the weight average molecular weight (Mw) is a polystyrene equivalent measured by gel permeation chromatography (GPC) using tetrahydrofuran.

As the polymer of the non-crosslinkable monomer, a commercially-available product may be used, such as ZEONEX (registered trademark) and ZEONOR (registered trademark) (cycloolefin polymer) manufactured by ZEON Corporation and QUINTAC (registered trademark) (a thermoplastic elastomer including the block structure of a polystyrene and a polyisoprene) manufactured by ZEON Corporation.

In the present disclosure, from the viewpoint of decreasing the dielectric dissipation factor of the hollow particles and improving the performance stability, in 100% by mass of the shell material, the total content of the non-crosslinkable monomer and the polymer of the non-crosslinkable monomer is preferably 15% by mass or more, more preferably 20% by mass or more, still more preferably 25% by mass or more, and even more preferably 35% by mass or more. On the other hand, from the point of view that the strength of the shell improves and the hollow particles are likely to keep a high void ratio, the total content of the non-crosslinkable monomer and the polymer of the non-crosslinkable monomer is preferably 60% by mass or less, more preferably 55% by mass or less, still more preferably 50% by mass or less, and even more preferably 40% by mass or less.

In the present disclosure, the raw material for the crosslinkable monomer unit in the shell preferably contains at least one selected from the group consisting of the non-crosslinkable monomer and the polymer of the non-crosslinkable monomer, and more preferably the non-crosslinkable monomer.

In terms of decreasing the dielectric dissipation factor of the hollow particles and improving the performance stability, the preferred content of the non-crosslinkable monomer and that of the polymer of the non-crosslinkable monomer vary depending on their types or on the type of the shell material used in combination.

When the shell material contains at least one kind of non-crosslinkable monomer selected from the group consisting of an aromatic monovinyl monomer and a monoolefin monomer and when the non-crosslinkable monomer is not used in combination with a polymer comprising the aromatic monovinyl monomer unit, in 100% by mass of the shell material, the content of the non-crosslinkable monomer is preferably within a range of from 15% by mass or more and 60% by mass or less. The upper limit of the content is preferably 55% by mass or less, more preferably 50% by mass or less, and still more preferably 40% by mass or less. In the case of using the non-crosslinkable monomer in combination with the polymer comprising the aromatic monovinyl monomer unit, in 100% by mass of the shell material, the content of the non-crosslinkable monomer is preferably 1% by mass or more, and more preferably 2% by mass or more, as the lower limit; moreover, it is preferably 30% by mass or less, more preferably 20% by mass or less, and still more preferably 10% by mass or less, as the upper limit.

When the shell material contains the polymer comprising the aromatic monovinyl monomer unit, in 100% by mass of the shell material, the content of the polymer is preferably 60% by mass or less. For example, in 100% by mass of the shell material, the content of the polymer may be 30% by mass or more, may be 40% by mass or more, may be 50% by mass or more, or may be 60% by mass. This is because the polymer comprising the aromatic monovinyl monomer unit is presumed to be less likely to cause a decrease in the strength of the shell and a decrease in the void ratio thereof, and even if the content is increased, the shell is likely to have good strength, and the hollow particles are likely to keep a high void ratio. The shell material preferably contains the polymer comprising the aromatic monovinyl monomer unit, from the point of view that a decrease in the shell strength is suppressed, and the hollow particles having a high void ratio can be easily obtained, while the dielectric dissipation factor of the shell can be decreased.

The polymer comprising the aromatic monovinyl monomer unit and the diene-based monomer unit is less likely to be soluble in the hydrophobic solvent described below. Accordingly, in 100% by mass of the shell material, the content of the polymer is preferably 20% by mass or less, more preferably 10% by mass or less, still more preferably 5% by mass or less. The lower limit of the content is not particularly limited. For example, in 100% by mass of the shell material, it may be 1% by mass or more.

In the present disclosure, it is preferable that the content of the non-crosslinkable monomer and that of the polymer of the non-crosslinkable monomer are adjusted depending on their types, and the total content of the non-crosslinkable monomer and the polymer of the non-crosslinkable monomer is adjusted to be within a range of 15% by mass or more and 60% by mass or less. It is more preferable that the content of the aromatic monovinyl monomer, that of the monoolefin monomer, that of the polymer comprising the aromatic monovinyl monomer unit, and that of the polymer comprising the aromatic monovinyl monomer unit and that of the diene-based monomer unit are adjusted, and their total content is adjusted to be within a range of 15% by mass or more and 60% by mass or less. From the viewpoint of decreasing the dielectric dissipation factor of the hollow particles and improving the performance stability, the total content is more preferably 20% by mass or more, still more preferably 25% by mass or more, and even more preferably 35% by mass or more. On the other hand, from the point of view that the strength of the shell improves and the hollow particles are likely to keep a high void ratio, the total content is more preferably 55% by mass or less, still more preferably 50% by mass or less, and even more preferably 40% by mass or less.

In the present disclosure, from the viewpoint of decreasing the dielectric dissipation factor of the hollow particles and improving the performance stability, in 100% by mass of the shell material, the total content of the non-crosslinkable monomer, the polymer of the non-crosslinkable monomer and the crosslinkable monomer is preferably 95% by mass or more, more preferably 97% by mass or more, still more preferably 99% by mass or more, and most preferably 100% by mass.

As the content of a heteroatom contained in the shell decreases, the relative permittivity and dielectric dissipation factor of the hollow particles tend to decrease, and the performance stability and heat resistance thereof tend to improve. Accordingly, from the viewpoint of improving the dielectric property, performance stability and heat resistance of the hollow particles, with respect to 100% by mass of the shell material, the content of a hydrocarbon compound is preferably 70% by mass or more, more preferably 80% by mass or more, still more preferably 90% by mass or more, even more preferably 95% by mass or more, and most preferably 100% by mass. The hydrocarbon compound is a hydrocarbon monomer and a polymer thereof.

The content of the shell material in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the content of the shell material is preferably from 15% by mass to 50% by mass, and more preferably from 20% by mass to 40% by mass.

From the viewpoint of suppressing a decrease in the strength of the obtained hollow particles, a deterioration in the dielectric property thereof, and a reduction in the performance stability thereof, the content of the shell material is preferably 96% by mass or more, and more preferably 97% by mass or more, with respect to the total mass (100% by mass) of a solid content obtained by excluding the hydrophobic solvent from the material for the oil phase in the mixture liquid.

In the present disclosure, the solid content includes all components excluding solvent, and a liquid polymerizable monomer and the like are included in the solid content.

(B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the droplets of the shell material composition containing the hydrophobic solvent are dispersed in the aqueous medium, is obtained. In the suspension step, phase separation occurs in the droplets of the shell material composition. As a result, the hydrophobic solvent with low polarity is likely to collect in the interior of the droplets of the shell material composition. In the end, according to their respective polarities, the hydrophobic solvent is distributed in the interior of the droplets of the shell material composition, and the material not containing the hydrophobic solvent is distributed at the periphery of the droplets of the shell material composition.

Then, in the polymerization step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

The hydrophobic solvent can be appropriately selected from the group consisting of known hydrophobic solvents, without particular limitation. As the hydrophobic solvent, examples include, but are not limited to, an ester such as ethyl acetate and butyl acetate; an ether ester such as propylene glycol monomethyl ether acetate and propylene glycol monoethyl ether acetate; and a hydrocarbon solvent. Of them, a hydrocarbon solvent is preferred, and a hydrocarbon solvent containing 5 to 8 carbon atoms is more preferred.

As the hydrocarbon solvent, examples include, but are not limited to, an aromatic hydrocarbon solvent such as benzene, toluene and xylene, and aliphatic hydrocarbons including a chain hydrocarbon solvent such as pentane, hexane, heptane, octane, 2-methylbutane, 2-methylpentane and a paraffin-based solvent, and a cyclic hydrocarbon solvent such as cyclohexane, methylcyclohexane and cycloheptane.

These hydrophobic solvents may be used alone or in combination of two or more.

From the point of view that phase separation easily occurs between the shell material and hydrophobic solvent in the droplets of the shell material composition during the suspension step, such an organic solvent is preferably selected as the hydrophobic solvent, that the water solubility of the organic solvent is smaller than that of the crosslinkable monomer contained in the shell material.

When the shell material contains the hydrocarbon compound in an amount of more than 50% by mass, a hydrocarbon solvent is preferred as the hydrophobic solvent; a chain hydrocarbon solvent is more preferred as the hydrophobic solvent; a chain hydrocarbon solvent containing 5 to 8 carbon atoms is still more preferred as the hydrophobic solvent; and at least one selected from the group consisting of pentane, hexane, heptane and octane is even more preferred as the hydrophobic solvent.

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity at 20°C of the hydrophobic solvent is preferably 2.5 or less, and more preferably 2.0 or less. The relative permittivity is one of the indices of the level of the polarity of a compound. In the case where the hydrophobic solvent has a sufficiently small relative permittivity of preferably 2.5 or less, and more preferably 2.0 or less, it is considered that phase separation progresses rapidly in the droplets of the shell material composition and the hollow portion is easily formed.

Examples of hydrophobic solvents having a relative permittivity at 20°C of 2.0 or less, are as follows. The inside of the parentheses is the value of relative permittivity.

Pentane (1.8), hexane (1.9), heptane (1.9), octane (1.9), cyclohexane (2.0).

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the shell material and so on include the hydrophobic solvent. Accordingly, as the content of the hydrophobic solvent increases, the void ratio of the obtained hollow particles tends to increase.

In the present disclosure, with respect to 100 parts by mass of the shell material, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. The content of the hydrophobic solvent in the mixture liquid is more preferably 70 parts by mass or more and 300 parts by mass or less, and still more preferably 80 parts by mass or more and 200 parts by mass or less, with respect to 100 parts by mass of the shell material.

(C) Polymerization initiator

In the production method of the present disclosure, the mixture liquid preferably contains an oil-soluble polymerization initiator as the polymerization initiator. The oil-soluble polymerization initiator is not particularly limited, as long as it is a lipophilic one having a solubility in water of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile). Of them, an organic peroxide is preferably used as the oil-soluble polymerization initiator, from the point of view that the dielectric property of the hollow particles is easily improved. In the case of using an organic peroxide as the polymerization initiator, the amount of unreacted polymerizable unsaturated bond remaining in the shell is easily decreased, and an increase in the molecular motion of the shell can be suppressed, accordingly. When a decomposition product of the polymerization initiator remains in the shell, the molecular motion of the shell tends to increase; however, a decomposition product of the organic peroxide is easily removed. Accordingly, in the case of using an organic peroxide as the polymerization initiator, the amount of the decomposition product of the polymerization initiator remaining in the shell can be decreased, and an increase in the molecular motion of the shell can be suppressed, accordingly.

With respect to 100 parts by mass of the polymerizable monomer in the mixture liquid, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the polymerization initiator is equal to or more than the lower limit value, a polymerization reaction can progress sufficiently. When the content of the polymerization initiator is equal to or less than the upper limit value, the polymerization initiator is less likely to remain after the end of the polymerization reaction, and an unexpected side reaction is less likely to progress.

(D) Dispersion stabilizer

The dispersion stabilizer is an agent for dispersing the droplets of the shell material composition in the aqueous medium in the suspension step. As the dispersion stabilizer, examples include, but are not limited to, an inorganic dispersion stabilizer, an organic or inorganic water-soluble polymer stabilizer and a surfactant.

In the present disclosure, an inorganic dispersion stabilizer is preferably used as the dispersion stabilizer, from the following viewpoints: the particle diameter of the droplets can be easily controlled in the suspension, and the dispersion stabilizer can be easily removed by the washing step; moreover, an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron (II) hydroxide; and silicon dioxide. These inorganic dispersion stabilizers may be used alone or in combination of two or more.

As the inorganic dispersion stabilizer, a sparingly water-soluble inorganic dispersion stabilizer is preferably used. The term "sparingly water-soluble" is preferably such that the solubility in water at 25°C is less than 1 g/L.

As the sparingly water-soluble inorganic dispersion stabilizer, a metal hydroxide is preferred, and a magnesium hydroxide is more preferred.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the inorganic dispersion stabilizer can be easily removed by the washing step described below.

The colloidal dispersion containing the sparingly water-soluble inorganic dispersion stabilizer colloidal particles can be prepared by, for example, reacting at least one selected from the group consisting of alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred.

The method for reacting the water-soluble polyvalent metal salt with the at least one selected from the group consisting of alkali metal hydroxide salts and alkaline earth metal hydroxide salts in the aqueous medium, is not particularly limited. For example, an aqueous solution of the water-soluble polyvalent metal salt may be mixed with an aqueous solution of the at least one selected from the group consisting of alkali metal hydroxide salts and alkaline earth metal hydroxide salts.

Also, colloidal silica may be used as the colloidal dispersion containing the sparingly water-soluble inorganic dispersion stabilizer colloidal particles.

As the organic water-soluble polymer stabilizer, examples include, but are not limited to, polyvinyl alcohol, a polycarboxylic acid (such as polyacrylic acid), a cellulose (such as hydroxyethyl cellulose, carboxymethyl cellulose, methyl cellulose and ethyl cellulose), polyvinylpyrrolidone, polyacrylimide, polyethylene oxide and a poly(hydroxystearic acid-g-methyl methacrylate-co-methacrylic acid) copolymer.

As the inorganic water-soluble polymer stabilizer, examples include, but are not limited to, sodium tripolyphosphate.

The surfactant is a compound containing both a hydrophilic group and a hydrophobic group per molecule. As the surfactant, examples include, but are not limited to, a conventionally-known ionic surfactant such as an anionic surfactant, a cationic surfactant and an amphoteric surfactant, and a conventionally-known non-ionic surfactant.

For the water-soluble polymer stabilizer and the surfactant, the solubility in water at 25°C is 1 g/L or more.

The content of the dispersion stabilizer is not particularly limited. With respect to the total mass (100 parts by mass) of the shell material and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the droplets of the shell material composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is preferably from 0.5 parts by mass to 15 parts by mass, and more preferably from 0.5 parts by mass to 10 parts by mass.

In the hollow particles of the present disclosure, from the viewpoint of suppressing a deterioration of the dielectric property and a deterioration of the performance stability, the amount of the residual dispersion stabilizer is preferably as small as possible. The hollow particles are most preferably free of a dispersion stabilizer. The hollow particles containing neither the organic water-soluble polymer stabilizer, the inorganic water-soluble polymer stabilizer nor the surfactant are particularly preferred. By using only the inorganic dispersion stabilizer as the dispersion stabilizer, the hollow particles containing neither the organic water-soluble polymer stabilizer, the inorganic water-soluble polymer stabilizer nor the surfactant can be obtained.

(E) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the droplets of the shell material composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol; tetrahydrofuran (THF); and dimethyl sulfoxide (DMSO).

The content of the aqueous medium is not particularly limited. From the viewpoint of controlling the particle diameter and void ratio of the hollow particles in the preferred ranges described below, with respect to 100 parts by mass of the shell material contained in the mixture liquid, the content of the aqueous medium is, as the lower limit thereof, preferably 200 parts by mass or more, more preferably 400 parts by mass or more, and still more preferably 600 parts by mass or more. The content is, as the upper limit thereof, preferably 1000 parts by mass or less, and more preferably 800 parts by mass or less.

The mixture liquid may further contain other materials that are different from the above-mentioned materials (A) to (E), to the extent that does not impair the effects of the present disclosure.

The mixture liquid is obtained by mixing the above-mentioned materials and other materials as needed, appropriately stirring the mixture, etc. In the mixture liquid, an oil phase containing lipophilic materials such as (A) the shell material, (B) hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the shell material, the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles such that the composition of the shell portion is uniform, can be produced. Also, the particle diameter of the hollow particles can be easily controlled.

(2) Suspension step

The suspension step includes suspending the above-described mixture liquid to prepare the suspension in which droplets of the shell material composition containing the hydrophobic solvent are dispersed in the aqueous medium.

The suspension method for forming the droplets of the shell material composition is not particularly limited, and a known suspension method can be employed. A disperser is used to prepare the suspension. As the disperser, for example, a horizontal or vertical in-line disperser such as MILDER (manufactured by Pacific Machinery & Engineering Co., Ltd.), CAVITRON (manufactured by EUROTEC, Ltd.) and an in-line disperser manufactured by IKA (e.g., DISPAX-REACTOR (registered trademark) DRS) or an emulsifying disperser such as HOMOMIXER MARK II series (manufactured by PRIMIX Corporation) can be used.

In the suspension prepared in the suspension step, the droplets of the shell material composition containing the lipophilic materials mentioned above and having a particle diameter of approximately from 1 $\mu$m to 10 um, are dispersed uniformly in the aqueous medium. Such droplets of the shell material composition are difficult to observe with the naked eye and can be observed with a known observation instrument such as an optical microscope.

In the suspension step, since phase separation occurs in the droplets of the shell material composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The droplets of the shell material composition dispersed in the aqueous medium are formed by the oil-soluble shell material composition and the dispersion stabilizer surrounding the periphery of the oil-soluble shell material composition. The droplets of the shell material composition contain the oil-soluble polymerization initiator, the shell material and the hydrophobic solvent.

The droplets of the shell material composition are minute oil droplets, and the oil-soluble polymerization initiator generates polymerization initiating radicals in the interior of the minute oil droplets. Therefore, the precursor particles having a target particle diameter can be produced without an excessive growth of the minute oil droplets.

In the suspension polymerization method using such an oil-soluble polymerization initiator, there is no opportunity for the polymerization initiator to come into contact with the polymerizable monomer dispersed in the aqueous medium. Therefore, by using the oil-soluble polymerization initiator, the subgeneration of surplus resin particles (e.g., solid particles having a relatively small particle diameter) in addition to the target resin particles having the hollow portion, can be suppressed.

(3) Polymerization step

The polymerization step includes subjecting the suspension obtained by the suspension step to a polymerization reaction to prepare a precursor composition containing precursor particles. The precursor particles have the hollow portion surrounded by the shell which contains the polymer, and they include the hydrophobic solvent in the hollow portion.

The polymerization system is not particularly limited. For example, a known polymerization system such as a batch system, a semicontinuous system and a continuous system may be employed.

In the present disclosure, from the viewpoint of suppressing the formation of concaves on the particles and obtaining the hollow particles having a high void ratio and being excellent in dielectric property, the polymerization reaction condition preferably includes a polymerization temperature of 80°C or more and a polymerization reaction time of 10 hours or more. The polymerization reaction time is more preferably 20 hours or more.

The upper limit of the polymerization temperature is not particularly limited. From the viewpoint of suppressing the evaporation of the aqueous medium, it is preferably 95°C or less.

The upper limit of the polymerization reaction time is not particularly limited. It is preferably 36 hours or less, from the viewpoint of ease of production.

(4) Solvent removal step

The solvent removal step includes removing the included hydrophobic solvent from the precursor particles. In the present disclosure, a method of removing the included hydrophobic solvent from the precursor particles in a gaseous atmosphere after solid-liquid separation of the slurry in which the precursor particles are dispersed in the aqueous medium, or a method of removing the included hydrophobic solvent from the precursor particles in the slurry may be employed.

The method of the solid-liquid separation is not particularly limited. As the method, examples include, but are not limited to, a centrifugation method, a filtration method, and still-standing separation. Among them, a filtration method is preferred from the viewpoint of simplicity of the operation and high dispersion stabilizer removal efficiency.

The precursor particles subjected to the solid-liquid separation may be preliminary dried before the removal of the hydrophobic solvent. The preliminary drying may be performed by drying a component in a solid form containing the precursor particles obtained by the solid-liquid separation, by use of a drying apparatus such as a dryer and a drying appliance such as a hand dryer.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and the combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As the method of removing the included hydrophobic solvent from the precursor particles in the slurry in which the precursor particles are dispersed in the aqueous medium, examples include, but are not limited to, evaporating the hydrophobic solvent included in the precursor particles at a predetermined pressure in the slurry. More specifically, examples include, but are not limited to, evaporating the hydrophobic solvent included in the hollow particles by introducing water vapor or inert gas such as nitrogen, argon and helium to the slurry at a predetermined pressure selected from the group consisting of high, normal and reduced pressures. From the viewpoint of excellent hydrophobic solvent removal efficiency, evaporating the hydrophobic solvent included in the hollow particles by introducing, at a predetermined pressure, inert gas to the slurry in which the precursor particles are dispersed, is particularly preferred.

As the method of introducing the inert gas into the slurry, for example, a method of bubbling the inert gas into the slurry is preferably used.

The temperature at the time of introducing the inert gas into the slurry is preferably a temperature equal to or more than the temperature obtained by subtracting 35°C from the boiling point of the hydrophobic solvent, more preferably a temperature equal to or more than the temperature obtained by subtracting 30°C from the boiling point of the hydrophobic solvent, and still more preferably a temperature equal to or more than the temperature obtained by subtracting 20°C from the boiling point of the hydrophobic solvent, from the viewpoint of reducing the amount of the residual hydrophobic solvent. When the hydrophobic solvent is a mixed solvent containing several types of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points. The temperature at the time of introducing the inert gas into the slurry is generally set to a temperature equal to or more than the polymerization temperature of the polymerization step. The temperature at the time of introducing the inert gas into the slurry is not particularly limited, and it may be from 50°C to 100°C.

Depending on the type and amount of the hydrophobic solvent, the condition of bubbling the inert gas into the slurry is appropriately controlled so that the included hydrophobic solvent can be removed from the precursor particles. The bubbling condition is not particularly limited. For example, the inert gas may be bubbled in an amount of 1 L/min to 3 L/min for 1 hour to 72 hours.

By the method of introducing the inert gas into the slurry, a slurry of the hollow particles including the inert gas is obtained. The slurry is subjected to solid-liquid separation to obtain hollow particles, and the obtained hollow particles are dried for removal of residual water, thereby obtaining the hollow particles in which the hollow portion is occupied by gas.

(5) Washing step

The method for producing the hollow particles of the present disclosure preferably includes the washing step before the solvent removal step described above.

The washing step may include removing the dispersion stabilizer from the precursor particles obtained by the polymerization step described above.

For example, the washing step is carried out by adding acid or alkali to the precursor composition obtained by the polymerization step to dissolve the dispersion stabilizer contained in the precursor particles into the aqueous medium, and then separating the precursor particles from the aqueous medium. When the dispersion stabilizer used is an acid-soluble inorganic dispersion stabilizer, acid is preferably added. When the dispersion stabilizer used is an alkali-soluble inorganic dispersion stabilizer, alkali is preferably added.

When the dispersion stabilizer used is the acid-soluble inorganic dispersion stabilizer, the pH of the precursor composition is preferably adjusted to 6.5 or less, and more preferably 6 or less, by adding acid to the precursor composition. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

Since the dielectric dissipation factor of the hollow particles is likely to decrease, in the washing step, an operation to wash the precursor particles separated after the acid or alkali addition with deionized water and then dehydrate the precursor particles, is preferably repeated several times. Also in the washing step, to suppress aggregation of the precursor particles, a small amount of nonionic surfactant may be added to the slurry.

The method for separating the precursor particles from the aqueous medium is not particularly limited. As the method, examples include, but are not limited to, the same methods exemplified above as the solid-liquid separation method. Among them, a filtration method is preferred from the viewpoint of simplicity of the operation and high dispersion stabilizer removal efficiency. Upon the separation of the precursor particles from the aqueous medium, the precursor particles obtained by the filtration method or the like are preferably dehydrated by a known method.

(6) Sieving step (aggregate removal step)

The method for producing the hollow particles of the present disclosure preferably includes a sieving step after the solvent removal step described above. Coarse powder particles and aggregates are removed by the sieving step, and foreign materials can be easily removed, accordingly.

The sieving method is not particularly limited, and a known method can be employed. For example, sieving may be carried out with a metal mesh of stainless steel or the like. More specifically, the hollow particles are put on the metal mesh; the metal mesh is vibrated; and the hollow particles passed through the metal mesh are obtained, thereby obtaining the hollow particles after the sieving. The size of the openings of the metal mesh used in the sieving step, is appropriately selected depending on the size of the hollow particles. The size of the openings is preferably a size such that the percentage of particles having a circularity of 0.85 or less is 5% by mass or less of the obtained hollow particles.

(7) Others

In addition to the steps (1) to (6) mentioned above, a particle interior substitution step may be added, for example.

The particle interior substitution step includes substituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application.

2. Hollow particles

The hollow particles of the present disclosure are particles comprising a shell (an outer shell), which contains at least one kind of polymer, and a hollow portion surrounded by the shell.

In the present disclosure, the hollow portion is a hollow space clearly distinguished from the shell of hollow particles formed from a resin material. The shell of the hollow particles may have a porous structure. In this case, the hollow portion has a size that is clearly distinguishable from many minute spaces uniformly dispersed in the porous structure. From the viewpoint of dielectric property and so on, the hollow particles of the present disclosure preferably have a solid shell.

The hollow portion of the hollow particles can be determined by, for example, SEM observation of a cross section of the particles or TEM observation of the particles as they are.

From the viewpoint of exerting excellent dielectric property, the hollow portion of the hollow particles of the present disclosure is preferably filled with gas such as air.

The hollow particles of the present disclosure contain the polymer as the main component of the shell, and the polymer forms the skeleton of the shell of the hollow particles. The polymer contained in the shell of the hollow particles contains at least a polymer formed by polymerization of the polymerizable monomer contained in the shell material, and it may further contain a polymer contained in the shell material. The polymer contained in the shell material may be or may not be bound to another polymer in the shell.

In the shell of the hollow particles of the present disclosure, from the viewpoint of suppressing a deterioration of the dielectric property, a decrease in the strength and a decrease in performance stability, the content of the polymer is preferably 96% by mass or more, more preferably 97% by mass or more, still more preferably 98% by mass or more, and even more preferably 99% by mass or more in the total solid content (100% by mass) of the shell.

The entire shell material substantially forms the polymer, since the hollow particles of the present disclosure are particles obtained by the polymerization reaction performed at the high temperature and for the long time as described above. In the hollow particles of the present disclosure, accordingly, the composition of the monomer unit of the polymer contained in the shell can be obtained from the composition of the shell material used for the production.

In the hollow particles of the present disclosure, the content of the non-crosslinkable monomer unit in 100% by mass of all the monomer units forming the whole polymer contained in the shell, is 15% by mass or more and 60% by mass or less. From the viewpoint of decreasing the dielectric dissipation factor of the hollow particles and improving the performance stability, the content of the non-crosslinkable monomer unit is preferably 20% by mass or more, more preferably 25% by mass or more, still more preferably 35% by mass or more. On the other hand, the content of the non-crosslinkable monomer unit is preferably 55% by mass or less, more preferably 50% by mass or less, and still more preferably 40% by mass or less, from the point of view that the strength of the shell improves and the hollow particles are likely to keep a high void ratio.

From the viewpoint of decreasing the dielectric dissipation factor of the hollow particles and improving the performance stability, and from the point of view that the strength of the shell improves and the hollow particles are likely to keep a high void ratio, the total content of the aromatic monovinyl monomer unit and the monoolefin monomer unit with respect to the total amount (100% by mass) of the non-crosslinkable monomer unit, is preferably 80% by mass or more, more preferably 90% by mass or more, and still more preferably 95% by mass or more, and it may be 100% by mass or more. From the same points of view, the content of the aromatic monovinyl monomer unit with respect to the total amount (100% by mass) of the non-crosslinkable monomer unit is preferably 80% by mass or more, more preferably 90% by mass or more, and still more preferably 95% by mass or more, and it may be 100% by mass or more.

The shell of the hollow particles of the present disclosure may contain a structure derived from a polymer of a non-crosslinkable monomer. In the hollow particles of the present disclosure, the content of the structure derived from the polymer of the non-crosslinkable monomer in 100% by mass of all the monomer units forming the whole polymer contained in the shell, corresponds to the content of the polymer of the non-crosslinkable monomer in 100% by mass of the above-described shell material. The content of the structure derived from the polymer of the non-crosslinkable monomer is not particularly limited, and it is preferably appropriately adjusted so that the content of the non-crosslinkable monomer unit in the shell is within the above-described range. Also, the content of the structure derived from the polymer of the non-crosslinkable monomer is preferably adjusted so that the content of the crosslinkable monomer unit in the polymer is 20% by mass or less, more preferably 10% by mass or less, and still more preferably 5% by mass or less in 100% by mass of all the monomer units forming the whole polymer contained in the shell. The content of the structure derived from the polymer of the non-crosslinkable monomer is particularly preferably adjusted so that the content of the diene-based monomer unit in the polymer is equal to or less than the upper limit value. Accordingly, the hollow particles having only one hollow portion are likely to be obtained.

In the hollow particles of the present disclosure, the content of the crosslinkable monomer unit in 100% by mass of all the monomer units forming the whole polymer contained in the shell, is 40% by mass or more and 85% by mass or less. From the point of view that the strength of the shell improves and the hollow particles are likely to keep a high void ratio, the content of the crosslinkable monomer unit is preferably 45% by mass or more, more preferably 50% by mass or more, and still more preferably 60% by mass or more. On the other hand, from the viewpoint of decreasing the dielectric dissipation factor of the hollow particles and improving the performance stability, the content of the crosslinkable monomer unit is preferably 80% by mass or less, more preferably 75% by mass or less, and still more preferably 65% by mass or less.

The shell of the hollow particles of the present disclosure preferably contains a hydrocarbon monomer unit. In the hollow particles of the present disclosure, the content of the hydrocarbon monomer unit in 100% by mass of all the monomer units forming the whole polymer contained in the shell, corresponds to the content of the hydrocarbon compound in 100% by mass of the above-described shell material. In the hollow particles of the present disclosure, the whole polymer contained in the shell is most preferably a hydrocarbon polymer.

Also in the hollow particles of the present disclosure, from the viewpoint of improving the dielectric property, the performance stability and the heat resistance, the content of a heteroatom is preferably 5% by mass or less, more preferably 3% by mass or less, still more preferably 1% by mass or less, and most preferably 0% by mass, with respect to 100% by mass of the whole polymer contained in the shell.

In the hollow particles of the present disclosure, the residual double bond ratio of the whole polymer contained in the shell is preferably 15.0% or less, more preferably 13.5% or less, still more preferably 11.0% or less, even more preferably 10.0% or less, and particularly preferably 9.5% or less. As the residual double bond ratio decreases, the dielectric dissipation factor of the hollow particles tends to decrease. The residual double bond ratio is preferably as small as possible. From the viewpoint of ease of production, the residual double bond ratio may be 2.0% or more, may be 5.0% or more, or may be 7.0% or more.

The residual double bond ratio can be obtained as follows.

First, the infrared absorption spectrum of the polymer contained in the hollow particles and that of the shell material used for the production of the hollow particles are measured, both of which are expressed in absorbance.

Meanwhile, among all of the monomer units of the polymer contained in the hollow particles, a monomer unit such that its content is the largest, is specified as a reference monomer unit. When several monomer units have the same and largest content, one of them is specified as a reference monomer unit. From the structures of the reference monomer unit, one structure whose amount does not increase or decrease before and after a polymerization reaction, is selected. As the structure whose amount does not increase or decrease before and after a polymerization reaction, a structure such that its infrared absorption spectrum peak is clearly distinguishable from the peak of a polymerizable unsaturated double bond (C=C) and is high in intensity, is preferably selected from the group consisting of the structures which are included in the reference monomer unit and which do not involve in a polymerization reaction. The peak derived from the structure is selected and specified as a reference peak.

For the infrared absorption spectrum of the polymer and that of the shell material, the peak intensity of the reference peak is divided by the content rate of the monomer containing the structure showing the reference peak. The value thus calculated is specified as a reference peak intensity.

Also, for the infrared absorption spectrum of the polymer and that of the shell material, the peak intensity of the peak derived from the polymerizable unsaturated double bond (C=C) is measured.

The ratio ($M_1/M_0$) of the peak intensity ($M_1$) of the peak derived from the polymerizable unsaturated double bond (C=C) to the reference peak intensity ($M_0$), all of which are obtained from the infrared absorption spectrum of the shell material, is specified as a peak intensity ratio when the residual double bond ratio is 100%.

The ratio of ($P_1/P_0$) of the peak intensity ($P_1$) of the peak derived from the polymerizable unsaturated double bond (C=C) to the reference peak intensity ($P_0$), all of which are obtained from the infrared absorption spectrum of the polymer contained in the hollow particles, is obtained in the same manner as described above. Then, using the peak intensity ratio ($M_1/M_0$) obtained from the infrared absorption spectrum of the shell material and the peak intensity ratio ($P_1/P_0$) obtained from the infrared absorption spectrum of the polymer, the residual double bond ratio can be calculated by the following formula (A).

$$\text{Residual double bond ratio (\%)} = \{(P_1/P_0) \ / \ (M_1/M_0)\} \times 100$$

Formula (A)

Each of the peak intensities can be quantified as a height from a base line, which is a straight line drawn between base points placed on the outside of both ends of the peak, to the peak top. The peak intensity and peak intensity ratio values used for the calculation of the residual double bond ratio are values rounded to three significant figures according to Rule B of JIS Z8401:1999. The residual double bond ratio is a value rounded to one decimal place.

The infrared absorption spectra can be measured by the attenuated total reflection (ATR) method, for example. The device for measuring the infrared absorption spectra may be SPECTRUM ONE (product name, manufactured by Perkin Elmer, Inc.), for example.

The void ratio of the hollow particles of the present disclosure is preferably 70% or more. When the void ratio is 70% or more, the hollow particles are excellent in dielectric property, and they are also excellent in lightness in weight, heat resistance, heat insulation property, and so on. The upper limit of the void ratio of the hollow particles is not particularly limited. From the viewpoint of suppressing a decrease in the strength of the hollow particles and improving the collapse-resistance of the hollow particles, it is preferably 90% or less, more preferably 85% or less, and still more preferably 80% or less.

The void ratio of the hollow particles can be calculated from the apparent density $D_1$ and true density $D_0$ of the hollow particles.

A method for measuring the apparent density $D_1$ of the hollow particles is as follows. First, approximately 30 cm$^3$ of the hollow particles are introduced into a measuring flask with a volume of 100 cm$^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ (g/cm$^3$) of the hollow particles is calculated by the following formula (I).

Apparent density $D_1$ = [Mass of the hollow particles] / --> (100 - [Mass of the isopropanol] / [Specific gravity of the isopropanol at the measuring temperature]) Formula (I)　　　　Formula (I)

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 cm$^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ (g/cm$^3$) of the hollow particles is calculated by the following formula (II).

True density $D_0$ = [Mass of the pulverized hollow particles] / (100 - [Mass of the isopropanol] / [Specific gravity of the isopropanol at the measuring temperature]) Formula (II)　　　　Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) from the apparent density $D_1$ and the true density $D_0$.

Void ratio (%) = 100 - (Apparent density $D_1$ / True density $D_0$) $\times$ 100 Formula (III)　　　　Formula (III)

In the present disclosure, the lower limit of the volume average particle diameter of the hollow particles is preferably 1.0 $\mu$m or more, more preferably 1.5 $\mu$m or more, and still more preferably 2.0 $\mu$m or more. On the other hand, the upper limit of the volume average particle diameter of the hollow particles is preferably 10.0 $\mu$m or less, more preferably 7.0 $\mu$m or less, still more preferably 5.0 $\mu$m or less, and even more preferably 4.0 $\mu$m or less.

When the volume average particle diameter of the hollow particles is equal to or more than the lower limit value, the dispersibility of the hollow particles improves; a uniform shell is easily formed; and shell thickness non-uniformity is suppressed. Accordingly, the pressure resistance of the hollow particles tends to improve. From the same point of view, in the hollow particles of the present disclosure, the percentage of the particles having a particle diameter of less than 1.0 $\mu$m on a volumetric basis, is preferably 8% by volume or less, more preferably 5% by volume or less, and still more preferably 4% by volume or less.

When the volume average particle diameter of the hollow particles is equal to or less than the upper limit value, since the particle diameter is sufficiently small, the hollow particles are preferably used as a material of a substrate such as an electronic circuit board, and they can be added to thin small substrates. From the same point of view, in the hollow particles of the present disclosure, the percentage of the particles having a particle diameter of more than 10.0 $\mu$m on a volumetric basis, is preferably 5% by volume or less, more preferably 2% by volume or less, and still more preferably 1% by volume or less.

The shape of the hollow particles of the present disclosure is not particularly limited, as long as the hollow portion is formed in the interior. For example, the shape may be a spherical shape, an ellipsoidal shape or an irregular shape. From the viewpoint of the dielectric property, dispersibility and pressure resistance of the hollow particles, the shape is preferably a spherical shape. In the above-described method for producing the hollow particles of the present disclosure, the hollow particles having a high circularity can be produced by using the above-described shell material and setting the condition of the polymerization reaction to the high temperature and long polymerization reaction time as described above.

The hollow particles of the present disclosure may contain, as impurities, small amounts of hollow particles having a low circularity, such as cracked or deformed particles or particles free of a hollow portion. In 100% by mass of the hollow particles of the present disclosure, the percentage of the particles having a circularity of 0.85 or less is preferably 5% by mass or less, more preferably 4% by mass or less, and still more preferably 3% by mass or less. By the above-described sieving step, the percentage of particles having a circularity of 0.85 or less can be adjusted to the upper limit value or less.

The term "circularity" is defined as a value obtained by dividing the equivalent circular area diameter which is the diameter of a circle having the same area as the projected image of a particle, by the equivalent circular perimeter diameter which is the diameter of a circle having the same perimeter as the projected image of the particle. The circularity is 1 when the hollow particles are perfectly spherical, and it gets smaller as the surface shape of the hollow particles becomes more complex.

The average circularity of the hollow particles of the present disclosure may be from 0.950 to 0.995.

In the present disclosure, the circularity is measured by use of a flow particle image analyzer at an image resolution of 0.185 um/pixel.

As the flow particle image analyzer, for example, IF-3200 (product name, manufactured by JASCO International Co., Ltd.) is preferably used. The measurement sample is prepared by, for example, performing a dispersion treatment of a mixture liquid, which is obtained by adding 0.10 g to 0.12 g of the hollow particles to an aqueous solution of linear alkylbenzene sulfonate (concentration 0.3%), in an ultrasonic cleaner for 5 minutes.

The average circularity is the average of the circularities of randomly selected 1000 to 3000 particles.

The hollow particles of the present disclosure may have one or two or more hollow portions. From the viewpoint of maintaining good balance between the high void ratio and the mechanical strength and from the viewpoint of improving the dielectric property, the hollow particles preferably have only one hollow portion.

When the hollow particles of the present disclosure are particles having only one hollow portion, the hollow particles of the present disclosure may contain, as impurities, a small amount of hollow particles having two or more hollow portions or a small amount of particles not having a hollow portion. In the hollow particles of the present disclosure, the percentage of the number of the particles having only one hollow portion is preferably 90% or more, and more preferably 95% or more.

The shell of the hollow particles of the present disclosure and, when the hollow particles have two or more hollow portions, a partition separating the adjacent hollow portions from each other may be porous. From the viewpoint of improving the dielectric property, the shell and the partition are preferably solid.

An example of the image of the shape of the hollow particles of the present disclosure, is a bag made of a thin film and inflated with gas. A cross-section of the bag is like the hollow particle 10 shown in the diagram (4) of FIG. 1. In this example, one thin film is provided on the outside, and the interior is filled with gas.

The shape of the particles can be determined by SEM or TEM, for example.

The hollow particles of the present disclosure preferably have a particle size distribution (volume average particle diameter (Dv) / number average particle diameter (Dn)) of 1.00 or more and 1.40 or less, and more preferably 1.00 or more and 1.35 or less. When the particle size distribution of the hollow particles is within the range, hollow particles such that performance slightly vary between the hollow particles, can be obtained. Also, a product having uniform thickness can be produced in the case of producing, for example, a sheet-shaped resin molded body mixed with the hollow particles of the present disclosure.

The volume average particle diameter (Dv) and number average particle diameter (Dn) of the hollow particles can be found as follows, for example. The particle diameter of each of the hollow particles is measured with a particle size distribution measuring apparatus; the number average and volume average of the particle diameters are calculated; and the obtained values can be used as the number average particle diameter (Dn) and volume average particle diameter (Dv) of the hollow particles. The particle size distribution is found by dividing the volume average particle diameter by the number average particle diameter.

The dielectric dissipation factor of the hollow particles of the present disclosure at a frequency of 10 GHz is $5.00 \times 10^{-4}$ or less. It is preferably $4.00 \times 10^{-4}$ or less, and more preferably $3.50 \times 10^{-4}$ or less. The lower limit of the dielectric dissipation factor is not particularly limited, and it may be $1.00 \times 10^{-4}$ or more, for example.

The relative permittivity of the hollow particles of the present disclosure at a frequency of 10 GHz is preferably 1.40 or less, more preferably 1.37 or less, and still more preferably 1.35 or less. The lower limit of the relative permittivity is not particularly limited, and it may be 1.00 or more, for example.

In the present disclosure, the relative permittivity and dielectric dissipation factor of the hollow particles are measured by use of a perturbation-type measuring device.

Since the hollow particles of the present disclosure has excellent performance stability, the difference in the dielectric dissipation factor at a frequency of 10 GHz before and after a HAST test in the condition of 130°C, 85% RH (humidity) and 120 hours can be less than 0.005. In a preferred embodiment, it can be less than 0.001.

In the hollow particles of the present disclosure, from the viewpoint of decreasing the dielectric dissipation factor of the hollow particles and improving the performance stability thereof, the content of the surfactant and organic or inorganic water-soluble polymer stabilizer present on the particle surface (hereinafter, they are simply referred to as "surfactant and so on") is preferably 200 ppm or less, more preferably 100 ppm or less, and still more preferably 50 ppm or less. By using only the inorganic dispersion stabilizer as the dispersion stabilizer in the above-described process of producing the hollow particles, the content of the surfactant and so on present on the surface of the hollow particles can be adjusted to less than the measurement limit value.

In the present disclosure, the content of the surfactant and so on present on the surface of the hollow particles means the ratio of the mass of the surfactant and so on present on the surface of the hollow particles to the mass of the hollow particles. The surfactant and so on present on the surface of the hollow particles can be extracted by, for example, ultrasonic treatment of the hollow particles in water. The type and mass of the surfactant and so on extracted into water can be identified by the peak position and peak intensity of a $^1$H-NMR spectrum. In this method, the measuring limit of the surfactant and so on present on the surface of the hollow particles, is generally 0.05 ppm.

In the present disclosure, the thermal decomposition initiation temperature of the hollow particles is preferably 345°C or more, and more preferably 350°C or more. When the thermal decomposition initiation temperature is equal to or more than the lower limit value, the hollow particles are excellent in heat resistance. The upper limit of the thermal decomposition initiation temperature of the hollow particles is not particularly limited. For example, it may be 400°C or less.

In the present disclosure, the thermal decomposition initiation temperature of the hollow particles can be measured as a 5% weight reduction temperature, using a TG-DTA device in an air atmosphere, in the condition of an air flow rate of 230 mL/min and a temperature increase rate of 10°C/min.

As the applications of the hollow particles of the present disclosure, examples include, but are not limited to, additives for the following: materials such as a low dielectric material, a heat insulation material, a sound insulation material and a light reflective material, which are used in various kinds of fields such as the automotive field, the electronics field, the electric field, the architecture field, the aviation field and the space field; food containers; footwears such as sports shoes and sandals; components of household appliances; components of bicycles; stationery supplies; tools; filaments of 3D printers; and floating buoyant materials such as syntactic foam. Especially because the hollow particles of the present disclosure are low in dielectric dissipation factor, excellent in dielectric property and excellent in performance stability, they are preferably used as a highly-reliable material in the electric or electronics field. For example, the hollow particles of the present disclosure are preferably used as an electronic circuit board material. More specifically, by incorporating the hollow particles of the present disclosure in the insulating resin layer of an electronic circuit board, the dielectric dissipation factor of the insulating resin layer can be decreased, while suppressing a failure attributable to the hollow particles. Also, the hollow particles of the present disclosure are preferably used as an additive used in semiconductor materials such as an interlayer insulation material, a dry film resist, a solder resist, a bonding wire, a magnet wire, a semiconductor encapsulating material, an epoxy encapsulating material, a molded underfill material, an underfill material, a die bonding paste, a buffer coating material, a copper-clad laminate, and a flexible substrate. Also, the hollow particles of the present disclosure are preferably used as an additive used in semiconductor materials for use in a high frequency device module, an antenna module, an automotive radar and so on. Of them, the hollow particles of the present disclosure are particularly preferable as an additive used in semiconductor materials such as an interlayer insulation material, a solder resist, a magnet wire, a semiconductor encapsulant, an epoxy encapsulating material, an underfill material, a buffer coating material, a copper-clad laminate and a flexible substrate. Also, the hollow particles of the present disclosure are particularly preferable as an additive used in semiconductor materials for use in a high frequency device module, an antenna module, an automotive radar and so on. The hollow particles of the present disclosure are applicable to not only semiconductor materials but also various kinds of electronic materials.

Also, the hollow particles of the present disclosure are useful as an additive for insulating resin sheets that are used for the production of electronic parts such as a printed circuit board. An insulating resin sheet containing the hollow particles of the present disclosure can be produced as follows, for example: a resin composition is prepared by mixing the hollow particles of the present disclosure and a thermoplastic resin, thermosetting resin, thermoplastic elastomer, or a mixture thereof, and the resin composition is molded into a sheet by applying the composition to one or both surfaces of a sheet-shaped substrate and drying the applied composition, by extrusion molding of the composition, by transferring the composition, etc., thereby producing the insulating resin sheet. When the resin or elastomer contained in the insulating resin sheet is adhesive, the insulating resin sheet can be used as an adhesive sheet. More specifically, it can be used as a bonding sheet, for example. A bonding sheet is a material for forming insulating adhesive layers which are used to attach a conductor layer and an organic insulating layer in the production of a multi-layer printed circuit board.

The hollow particles of the present disclosure have a high void ratio, are less likely to collapse, and have high heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

Also, the hollow particles of the present disclosure are suitable as a rust retardant. Since the hollow particles of the present disclosure are also useful as an additive for decreasing conductivity, for example, a coating material containing the hollow particles of the present disclosure can be used as a rust-resistant coating material (such as a coating primer and a lubricating coating material) for increasing the anticorrosivity and rust resistance of steel and so on. A rust-resistant additive may be included in the hollow particles added to rust-resistant coating materials.

3. Resin composition

The resin composition of the present disclosure contains at least the hollow particles of the present disclosure described above and a matrix resin. The resin composition is typically in the form of liquid, and it may be in the form of pellets or may be a prepreg. The resin composition of the present disclosure may be used as a material for molding the molded body described below.

As the resin composition in the form of liquid, examples include, but are not limited to, a liquid resin composition containing a liquid matrix resin before being subjected to curing reaction, and a liquid resin composition obtained by dissolving or dispersing components in a solvent. The liquid matrix resin before being subjected to curing reaction and the matrix resin dissolved or dispersed in a solvent, may be a thermosetting resin, a room temperature curable resin or a thermoplastic resin. Also, the liquid resin composition may be a resin composition liquefied by melting the matrix resin thereinto. The prepreg can be obtained by, for example, impregnating a substrate with the liquid resin composition and drying them. As the resin composition in the form of pellets, examples include, but are not limited to, a pelletized resin composition obtained by melt-kneading a resin composition containing a thermoplastic matrix resin and the hollow particles and then pelletizing the resin composition when solidified by cooling.

In a resin composition and a molded body both of which contain conventional hollow particles, compared to the case of not containing hollow particles, the performance stability in a high-humidity environment, after a long-term storage or the like tends to decrease. Meanwhile, the resin composition and molded body of the present disclosure, both of which contain the hollow particles of the present disclosure, are those in which a reduction in the performance stability is suppressed, while the dielectric dissipation factor is decreased because of containing the hollow particles.

As the matrix resin, examples include, but are not limited to, a curable resin such as a thermosetting resin, a photocurable resin and a room temperature curable resin, and a thermoplastic resin. Of them, a thermosetting resin, a room temperature curable resin or a thermoplastic resin is preferably used.

The matrix resin may be an unreacted monomer, prepolymer or macromonomer; it may be a polymer; or it may be a precursor of a cured resin, such as a polyamic acid. The matrix resin contained in the resin composition of the present disclosure functions as a binder when cured by, for example, heating or light irradiation, or when cured by use of a curing agent, a polymerization initiator, a catalyst or the like.

As the thermosetting resin, a known thermosetting resin may be used, and it is not particularly limited. As the thermosetting resin, examples include, but are not limited to, a phenolic resin, a melamine resin, a urea resin, an unsaturated polyester resin, an epoxy resin, a polyurethane resin, a silicon resin, an alkyd resin, a benzoxazine resin, an allyl resin, an aniline resin, a modified polyphenylene ether resin, a thermosetting polyimide resin, a maleimide resin, a bismaleimide triazine resin, a liquid crystalline polyester resin, a vinyl ester resin, a cyanate ester resin, and precursors of these resins before curing.

As the room temperature curable resin, examples include, but are not limited to, an adhesive that is curable at room temperature by addition of a catalyst, such as an epoxy adhesive, a silicone adhesive and an acrylic adhesive.

As the thermoplastic resin, a polyamide resin (such as PA6, PA66 and PA12), a polyphenylene sulfide resin, a liquid crystal polymer (LCP), a polystyrene resin, a polyphenylene oxide resin or the like is preferably used. As the thermoplastic resin, examples also include, but are not limited to, a polyolefin resin (such as polypropylene and polyethylene), a polycarbonate resin, a polyether ether ketone resin, a polyetherketoneketone resin, a polyimide resin, a polyamideimide resin, a polyetherimide resin, a polyvinyl chloride resin, a poly (meth) acrylate resin, a polyvinylidene fluoride resin, an acrylonitrile-butadiene-styrene copolymer (ABS) resin, an acrylonitrile-styrene copolymer (AS) resin, a polyphenylene ether resin, a polyester resin, a polytetrafluoroethylene resin and a thermoplastic elastomer. In general, a thermoplastic elastomer has properties such that it shows rubber elasticity at ordinary temperature (25°C) and it can be plasticized and molded at high temperature. As the thermoplastic elastomer, examples include, but are not limited to, a urethane-based elastomer, a styrene-based elastomer, an olefin-based elastomer, an amide-based elastomer and an ester-based elastomer.

In applications that needs a decrease in dielectric dissipation factor, a thermosetting or thermoplastic resin is preferably used as the matrix resin. Of them, a thermosetting resin such as an epoxy resin, a thermosetting polyimide resin, a modified polyphenylene ether resin, a silicon resin, a benzoxazine resin and a melamine resin is preferably used.

In the resin composition of the present disclosure, the content of the matrix resin is not particularly limited. In general, it is preferably from 40% by mass to 95% by mass in 100% by mass of the total solid content of the resin composition. The lower limit of the content is more preferably 50% by mass or more, still more preferably 70% by mass or more, and even more preferably 85% by mass or more. The upper limit is more preferably 90% by mass or less. When the content of the matrix resin is equal to or more than the lower limit value, the moldability of the resin composition can improve, and the mechanical strength of the resin composition when molded into a molded body can improve. On the other hand, when the content of the matrix resin is equal to or less than the upper limit value, the hollow particles can be sufficiently contained; therefore, excellent effects are exerted by the hollow particles, such as the effect of decreasing the dielectric dissipation factor, permittivity and weight of the resin composition.

As the matrix resin, one kind of matrix resin can be used alone, or two or more kinds of matrix resins can be used in combination.

[Hollow particles]

The hollow particles contained in the resin composition of the present disclosure are the above-described hollow particles of the present disclosure.

In the resin composition of the present disclosure, the content of the hollow particles is not particularly limited. In 100% by mass of the total solid content of the resin composition, the lower limit of the content of the hollow particles is preferably 5% by mass or more, and more preferably 10% by mass or more. On the other hand, the upper limit is preferably 50% by mass or less, and more preferably 30% by mass or less. The upper limit may be 20% by mass or less, or it may be 15% by mass or less. When the content of the hollow particles is equal to or more than the lower limit value, excellent effects are exerted by the hollow particles, such as the effect of decreasing the dielectric dissipation factor, permittivity and weight of the resin composition. When the content of the hollow particles is equal to or less than the upper limit value, the resin can be sufficiently contained in the resin composition; therefore, a decrease in the properties of the resin composition when molded into a molded body can be suppressed, and the mechanical properties can be improved.

[Solvent]

The resin composition of the present disclosure may further contain a solvent for dissolving or dispersing the components. A known solvent can be used as the solvent, and it is appropriately selected depending on the type of the matrix resin.

[Other additives]

As needed, the resin composition of the present disclosure may further contain additives to the extent that does not impair the effects of the present disclosure, such as a curing agent, a curing accelerator, a polymerization initiator, a UV absorber, a colorant, a thermal stabilizer and a filler.

The resin composition of the present disclosure may contain organic or inorganic reinforcing fibers such as carbon fibers, glass fibers, aramid fibers, polyethylene fibers, cellulose nanofibers and liquid crystal polymer (LCP) fibers. The reinforcing fibers contained in the resin composition of the present disclosure may be reinforcing fibers used as the substrate of a prepreg, or they may be reinforcing fibers contained as a filler.

As described above, the matrix resin or the solvent is less likely to penetrate the interior of the hollow particles of the present disclosure contained in the resin composition of the present disclosure. In the resin composition of the present disclosure, accordingly, the period of time for which all of the hollow particles can retain their voids without allowing the matrix resin or the solvent to penetrate the interior of the hollow particles, can be 10 days or more. In a preferred embodiment, the term can be 30 days or more. For example, the hollow particles floating in the upper part of the resin composition when centrifuging the resin composition, can be considered to be those in which there is no penetration by the matrix resin and the solvent.

The matrix resin and solvent contained in the resin composition are as described above. The matrix resin may be a resin commonly used in electronic material applications, such as an epoxy resin, a thermosetting polyimide resin and a modified polyphenylene ether resin.

**4.** Molded body

The molded body of the present disclosure contains the hollow particles of the present disclosure described above and a solidified product of a matrix resin. The molded body of the present disclosure has properties of a low dielectric dissipation factor, a low permittivity and lightweight, which are imparted by the hollow particles contained therein.

The molded body of the present disclosure may be a molded body obtained by molding the above-described resin composition of the present disclosure, or it may be a molded body obtained by melt-kneading the hollow particles of the present disclosure and a thermoplastic resin and molding the resulting mixture.

In the present disclosure, the solidified product of the matrix resin is a matrix resin solidified through or not through a chemical reaction, such as a resin cured by a curing reaction, a resin solidified by drying, and a resin solidified by cooling a thermoplastic resin. The molded body obtained by use of the resin composition of the present disclosure may contain, as the solidified product of the matrix resin, a cured matrix resin product which is cured by using a curing agent, a polymerization initiator, a catalyst or the like as needed. In this case, the solidified product of the matrix resin may contain a curing agent or the like. The molded body obtained by melt-kneading the hollow particles of the present disclosure and the thermoplastic resin and molding the resulting mixture, contains a solidified product as the solidified product of the matrix resin, which is the thermoplastic resin solidified by cooling.

The above-described molded body of the resin composition of the present disclosure can be obtained by, for example, curing the above-described curable resin. The method for curing the curable resin is not particularly limited. As the method, examples include, but are not limited to, heating and light irradiation such as ultraviolet and electron beam. In the case of a curable resin that is curable at room temperature by addition of a catalyst or the like, the curable resin may be cured by adding a catalyst or the like to the resin and mixing them at room temperature.

The curing agent (crosslinking agent) or catalyst for curing the resin can be appropriately selected from the group consisting of known agents and catalysts, depending on the type of the resin, and it is not particularly limited.

As the curing agent for curing the epoxy-based resin, examples include, but are not limited to, amines, acid anhydrides, imidazoles, thiols, phenols, naphthols, benzoxazines, cyanate esters and carbodiimides.

The content of the curing agent is appropriately adjusted depending on the resin type, and it is not particularly limited. For example, with respect to 100 parts by mass of the resin (the base material), the content of the curing agent may be from 5 parts by mass to 120 parts by mass.

The resin composition may be cured by, for example, applying the resin composition to a support, drying the applied resin composition as needed, and then curing the dried resin composition in a curing condition.

As the material of the support, examples include, but are not limited to, a resin such as polyethylene terephthalate and polyethylene naphthalate, and a metal such as copper, aluminum, nickel, chromium, gold and silver. The surface of the support may be coated with a release agent.

The resin composition can be applied by a known method. As the method, examples include, but are not limited to, dip coating, roll coating, curtain coating, die coating, slit coating and gravure coating.

When the resin composition contains the solvent, the resin composition of the present disclosure is preferably dried after the application of the resin composition. From the viewpoint of removal of the solvent while the resin composition is in an uncured or semi-cured state, the drying temperature is preferably a temperature at which the resin composition is not cured, and it is generally 20°C or more and 200°C or less, and preferably 30°C or more and 150°C or less. The drying time is generally 30 seconds or more and 1 hour or less, and preferably 1 minute or more and 30 minutes or less.

The curing temperature of the resin composition is appropriately adjusted depending on the type of the matrix resin, and it is not particularly limited. In the case of the thermosetting resin, the curing temperature is generally 30°C or more and 400°C or less, preferably 70°C or more and 300°C or less, and more preferably 100°C or more and 200°C or less. The heating method is not particularly limited. For example, an electric oven may be used.

The curing time is generally 5 minutes or more and 5 hours or less, and preferably 30 minutes or more and 3 hours or less.

When the resin composition of the present disclosure is a prepreg, the molded body can be obtained by curing the prepreg.

The preferred condition of curing the prepreg is the same as the above-described preferred condition of curing the resin composition.

**EP 4 582 489 A1**

In the molded body of the present disclosure, which is obtained by melt-kneading the hollow particles of the present disclosure and the thermoplastic resin and molding the resulting mixture, the thermoplastic resin is not particularly limited, and a conventionally-known thermoplastic resin can be used as the thermoplastic resin. As the thermoplastic resin, examples include, but are not limited to, those exemplified above as the thermoplastic resin that is applicable to the resin composition of the present disclosure.

The thermoplastic resin-containing molded body of the present disclosure may further contain additives, as needed. As the additives, those exemplified above as the additives that are applicable to the resin composition of the present disclosure, can be used.

The melt-kneading temperature is not particularly limited, as long as it is a temperature at which the thermoplastic resin used can be melted. From the viewpoint of suppressing the collapse of the hollow particles, it is preferably 250°C or less.

The melt-kneading can be carried out by a known method, and it is not particularly limited. For example, it can be carried out by use of a kneader such as a uniaxial or biaxial kneader.

The molding method is not particularly limited, and a known molding method such as extrusion molding, injection molding, press molding and compression molding can be employed.

In the molded body of the present disclosure, the content of the solidified product of the matrix resin in 100% by mass of the molded body is not particularly limited. From the viewpoint of suppressing a decrease in the properties of the molded body and increasing the mechanical strength thereof, the content of the solidified product of the matrix resin is preferably 70% by mass or more, and more preferably 80% by mass or more. From the viewpoint of sufficiently containing the hollow particles, it is preferably 95% by mass or less, and more preferably 90% by mass or less.

The content of the hollow particles in the molded body of the present disclosure is not particularly limited. On a mass basis, in 100% by mass of the molded body, the content of the hollow particles is preferably 5% by mass or more, and more preferably 10% by mass or more; moreover, it is preferably 30% by mass or less, more preferably 20% by mass or less, and still more preferably 15% by mass or less. On a volumetric basis, in 100% by volume of the molded body, the content of the hollow particles is preferably 10% by volume or more, and more preferably 20% by volume or more; moreover, it is preferably 50% by volume or less, more preferably 40% by volume or less, and still more preferably 30% by volume or less. When the content of the hollow particles is equal to or more than the lower limit value, excellent effects are exerted by the hollow particles, such as the effect of decreasing the dielectric dissipation factor, permittivity and weight of the molded body. When the content of the hollow particles is equal to or less than the upper limit value, the matrix resin can be sufficiently contained in the molded body; therefore, a decrease in the properties of the molded body can be suppressed, and the mechanical properties can be improved.

The form of the molded body is not particularly limited, and it may be any kind of moldable form such as a sheet form, a film form and a plate form. When the molded body contains fibers, the fibers in the molded body may be in the form of nonwoven fabric, or the molded body may be a molded body obtained by adding the hollow particles of the present disclosure to a fiber reinforced plastic.

The dielectric dissipation factor of the molded body of the present disclosure at a frequency of 10 GHz is preferably $5.00 \times 10^{-3}$ or less, more preferably $4.50 \times 10^{-3}$ or less, and still more preferably $4.30 \times 10^{-3}$ or less. The lower limit thereof is not particularly limited, and it may be $1.00 \times 10^{-3}$ or more, for example.

The relative permittivity of the molded body of the present disclosure at a frequency of 10 GHz is preferably 2.50 or less, more preferably 2.30 or less, and still more preferably 2.20 or less. The lower limit thereof is not particularly limited, and it may be 1.00 or more, for example.

In the present disclosure, the relative permittivity and dielectric dissipation factor of the molded body are measured by use of a perturbation-type measuring device.

As the applications of the resin composition and molded body of the present disclosure, examples include, but are not limited to, those in which the resin composition or the molded body can be used, among the above-mentioned applications of the hollow particles of the present disclosure.

Examples

Hereinbelow, the present disclosure is described more specifically using examples and comparative examples. However, the present disclosure is not limited to these examples. Also, "part(s)" and "%" are on a mass basis unless otherwise specified.

[Example 1]

1. Preparation of hollow particles

(1) Mixture liquid preparation step

First, the following materials were mixed to produce an oil phase.

Divinylbenzene: 31.4 parts
Ethylvinylbenzene: 7.3 parts
t-Butylperoxy diethylacetate: 0.89 parts
Hydrophobic solvent (Heptane): 61.3 parts

Next, in a stirring tank, an aqueous solution in which 13.7 parts of sodium hydroxide (an alkali metal hydroxide) was dissolved in 69 parts of deionized water, was gradually added under stirring to an aqueous solution in which 19.6 parts of magnesium chloride (a water-soluble polyvalent metal salt) was dissolved in 211 parts of deionized water, thereby preparing a magnesium hydroxide (sparingly water-soluble metal hydroxide) colloidal dispersion (magnesium hydroxide: 10 parts). The dispersion was used as an aqueous phase.
The obtained aqueous phase and oil phase were mixed, thereby preparing a mixture liquid.

(2) Suspension step

The mixture liquid obtained in the mixture liquid preparation step was suspended with an emulsifying disperser (product name: HOMOMIXER, manufactured by PRIMIX Corporation) at a rotational frequency of 4,000 rpm for one minute, thereby preparing a suspension in which droplets of a shell material composition including the hydrophobic solvent were dispersed in water.

(3) Polymerization step

In a nitrogen atmosphere, the temperature of the suspension obtained in the suspension step was increased to 80°C. The suspension was stirred for 24 hours under a temperature condition of 80°C, thereby performing a polymerization reaction. Accordingly, a precursor composition was obtained, which was a slurry solution in which precursor particles including the hydrophobic solvent were dispersed in water.

(4) Washing step

The precursor composition obtained in the polymerization step was mixed with dilute sulfuric acid at room temperature (25°C) to bring the pH of the composition to 5.5 or less. After the composition was stirred for 10 minutes, it was filtered and dehydrated. Then, while kept at room temperature (25°C), a series of the steps of washing the precursor particles with deionized water, filtering the precursor particles and then dehydrating the precursor particles was repeatedly performed several times.

(5) Solvent removal step

The precursor particles obtained by the washing step were dried with a drier at a temperature of 40°C for preliminary drying.
Next, the precursor particles were subjected to heating treatment for 12 hours with a vacuum dryer in a vacuum condition at 200°C, thereby removing the included hydrophobic solvent from the particles. Accordingly, the hollow particles in which the hollow portion was filled with air, were obtained.

(6) Sieving step

The hollow particles obtained in the solvent removal step were sieved with a metal mesh having an opening size of 45 μm. The hollow particles passed through and dropped from the metal mesh were collected, thereby obtaining the hollow particles of Example 1.

2. Production of PPE film containing hollow particles

First, 20 parts of 65% toluene solution of polyphenylene ether (PPE) (product name: OPE-2200, manufactured by Mitsubishi Gas Chemical Company, Inc.) was measured in a cup, and the hollow particles and 0.15 parts of PERCUMYL (registered trademark) D (manufactured by NOF Corporation) were added thereto. The mixture thus-obtained was uniformly dispersed by use of a planetary centrifugal mixer (product name: MAZERUSTAR, manufactured by Kurabo Industries Ltd.), thereby obtaining a resin composition containing the hollow particles. The amount of the added hollow particles was adjusted so that the content of the hollow particles in a PPE film containing the hollow particles, was 30% by volume. An aluminum foil was attached to a glass plate without shrinkage. On the attached aluminum foil, the obtained resin composition was applied by use of bar coater No. 75 to form a coating film. Under a nitrogen atmosphere, the coating film was cured by heating at 80°C for one hour, 120°C for 30 minutes and then 160°C for one hour, thereby forming a PPE film containing the hollow particles on the aluminum foil. The thus-obtained laminate of the film and the aluminum foil was immersed overnight in a 1 N hydrochloric acid aqueous solution to remove the aluminum foil, thereby obtaining the film only. The obtained film was washed with deionized water and dried, thereby obtaining the PPE film containing the hollow particles.

3. Preparation of double-sided copper clad laminate containing hollow particles

(1) Preparation of resin composition containing hollow particles

First, 90 parts of brominated epoxy resin (product name: YDB-500EK75, manufactured by Tohto Kasei Co., Ltd., epoxy equivalent: 500, solid content: 75% by mass) and 10 parts of cresol novolac type epoxy resin (product name: YDCN220EK75, manufactured by Tohto Kasei Co., Ltd., epoxy equivalent: 210, solid content: 75% by mass) were dissolved in a mixed solvent (room temperature) of 20 parts of dimethylformamide (DMF) and 6 parts of methyl ethyl ketone (MEK). In addition, 2 parts of dicyandiamide (DICY) (manufactured by Nippon Carbide Industries, Co., Inc.) and 0.1 parts of 2-ethyl-4-methylimidazole (product name: CUREZOL (registered trademark) 2E4MZ, manufactured by Shikoku Chemicals Corporation) were added thereto, and they were mixed by stirring, thereby preparing a resin varnish.
Next, the resin varnish was cooled to room temperature, and 95 parts of the cooled resin varnish and 5 parts of the hollow particles were mixed by stirring with a dispersion mixer at 3000 rpm for 30 minutes, thereby obtaining a resin composition containing the hollow particles.

(2) Production of prepreg containing hollow particles

A glass cloth (product name: WEA116E, manufactured by Nitto Boseki Co., Ltd.) was impregnated with the obtained resin composition containing the hollow particles. Then, the cloth was dried by heating at a temperature of from 150°C to 170°C for 3 minutes to 10 minutes, thereby obtaining a prepreg containing the hollow particles.

(3) Production of double-sided copper clad laminate containing hollow particles

A copper foil having a thickness of 35 $\mu$m was disposed on both sides of the prepreg containing the hollow particles. They were heated and pressed in the following curing condition, thereby obtaining a double-sided copper clad laminate containing the hollow particles and having a thickness of 0.13 mm.

Temperature: 180°C
Heating and pressing time: 2 hours
Pressure: 2.94 MPa (30 kg/cm$^2$)

[Examples 2 to 8 and Comparative Examples 1, 5 and 6]

In Examples 2 to 8 and Comparative Examples 1, 5 and 6, hollow particles, a PPE film containing the hollow particles, and a double-sided copper clad laminate containing the hollow particles were prepared in the same manner as Example 1, except for the following: in "(1) Mixture liquid preparation step", the type and amount of the shell material added to the oil phase were changed according to Table 1 or 2, and only in Example 8, the amount of the added hydrophobic solvent and polymerization initiator were also changed according to Table 1.

[Comparative Example 2]

The hollow particles of Comparative Example 2 were prepared in the same manner as Example 1, except for the following: in "(1) Mixture liquid preparation step", the type and amount of the shell material and polymerization initiator added to the oil phase were changed according to Table 2; moreover, in "(3) Polymerization step", the reaction temperature was changed from 80°C to 40°C, and the reaction time was changed from 24 hours to 4 hours.

[Comparative Example 3]

The hollow particles of Comparative Example 3 were prepared in the same manner as Example 1, except for the following: in "(1) Mixture liquid preparation step", the type and amount of the shell material and polymerization initiator added to the oil phase and the amount of the hydrophobic solvent were changed according to Table 2; moreover, in "(3) Polymerization step", the reaction temperature was changed from 80°C to 65°C, and the reaction time was changed from 24 hours to 4 hours.

[Comparative Example 4]

The hollow particles of Comparative Example 4 were produced as those corresponding to the hollow particles described in Patent Document 2 (International Publication No. WO2021/085189).
First, the following materials were mixed to produce an oil phase.

Divinylbenzene: 17.5 parts
Ethylvinylbenzene: 4.1 parts
Styrene: 13.5 parts
Polystyrene (weight average molecular weight 300,000): 2.1 parts
BLEMMER (registered trademark) 50 PEP-300 (product name, polyethylene glycol-propylene glycol monomethacrylate, manufactured by NOF Corporation): 3.5 parts
t-Butylperoxy diethylacetate: 1.16 parts
Hydrophobic solvent (heptane): 28.1 parts

Next, an aqueous phase was produced by mixing 34 parts of deionized water and 0.017 parts of RAPISOL A-80 (surfactant, manufactured by NOF Corporation).
The oil phase was added to the aqueous phase, and a suspension was prepared by use of an ultrasonic homogenizer. The suspension thus obtained was heated at 70°C for 4 hours for polymerization, thereby obtaining a slurry. The obtained slurry was heated at 100°C for 24 hours, thereby producing the hollow particles of Comparative Example 4.
In the hollow particles obtained in Examples 1 to 8, the percentage of the number of the particles having only one hollow portion was 90% or more.

[Evaluation]

The hollow particles, the PPE film containing the hollow particles, and the double-sided copper clad laminate containing the hollow particles obtained in the above-described Examples and the Comparative Examples were measured and evaluated as follows. The results are shown in Tables 1 and 2.

<Measurement or evaluation of hollow particles>

1. Particle diameter and particle size distribution

The volume average particle diameter (Dv) and number average particle diameter (Dn) of the hollow particles were measured with a particle size distribution measuring device by the Coulter counter method (product name: MULTISIZER 4e, manufactured by Beckman Coulter, Inc.) The measurement condition was as follows.

Aperture diameter: 50 $\mu$m
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.
From the measured volume average particle diameter (Dv) and number average particle diameter (Dn), the particle size distribution (Dv/Dn) was calculated.
Among the measured particles, the percentage on a volumetric basis (% by volume) of those having a particle diameter of less than 1.0 $\mu$m and the percentage on a volumetric basis (% by volume) of those having a particle diameter of more than 10.0 $\mu$m, were calculated.

2. Void ratio

2-1. Measurement of apparent density of hollow particles

First, approximately 30 cm$^3$ of the hollow particles were introduced into a measuring flask with a volume of 100 cm$^3$, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density $D_1$ (g/cm$^3$) of the hollow particles was calculated by the following formula (I).

Apparent density $D_1$ = [Mass of the hollow particles] / (100 - [Mass of the isopropanol] / [Specific gravity of the isopropanol at the measuring temperature]) Formula (I)       Formula (I)

2-2. Measurement of true density of hollow particles

The hollow particles were pulverized in advance; approximately 10 g of the pulverized hollow particles were introduced into a measuring flask with a volume of 100 cm$^3$; and the mass of the introduced pulverized particles was precisely weighed.
Then, similarly to the measurement of the apparent density mentioned above, isopropanol was added to the measuring flask; the mass of the isopropanol was precisely weighed; and the true density $D_0$ (g/cm$^3$) of the hollow particles was calculated by the following formula (II).

True density $D_0$ = [Mass of the pulverized hollow particles] / (100 - [Mass of the isopropanol] / [Specific gravity of the isopropanol at the measuring temperature]) Formula (II)       Formula (II)

2-3. Calculation of void ratio

The void ratio of the hollow particles was calculated by the following formula (III) where $D_1$ is the apparent density of the hollow particles and $D_0$ is the true density thereof.

Void ratio (%) = 100 - (Apparent density $D_1$ / True density $D_0$) $\times$ 100 Formula (III)       Formula (III)

3. Residual double bond ratio

For each of the polymer contained in the hollow particles and the shell material, the infrared absorption spectrum expressed in absorbance was measured by use of ATR-IR (product name: SPECTRUM ONE, manufactured by PERKIN ELMER Inc.) The measurement of the shell material was carried out as follows: 0.1 g of the shell material was placed on the top of a cell, and the shell material was brought into contact with a crystal and measured. The measurement of the polymer contained in the hollow particles was carried out as follows: 0.1 g of the hollow particles were placed on the top of a cell, and the hollow particles were brought into contact with a crystal by fastening a compression bearing from the top, thereby measuring the polymer.
From each of the thus-obtained infrared absorption spectra, the residual double bond ratio was calculated by the above-mentioned method.
For example, in Example 1, 31.4 parts (81% by mass) of divinylbenzene and 7.3 parts (19% by mass) of ethylvinylbenzene were used as the shell material. Since the content was the largest, a monomer unit derived from the divinylbenzene (81% by mass) was selected as the reference monomer unit. As the structure that does not increase or decrease before and after a polymerization reaction, the C-H bond of the benzene ring contained in the divinylbenzene was selected.
For the infrared absorption spectrum of the shell material and for the infrared absorption spectrum of the polymer, the peak derived from the C-H bond of the benzene ring contained in the divinylbenzene was specified as the reference peak. Since the peak derived from the C-H bond of the benzene ring contained in the divinylbenzene and the peak derived from the C-H bond of the benzene ring contained in the ethylvinylbenzene appear at the same position, the value obtained by dividing the peak intensity of the reference peak by the total content rate (1.00) of the divinylbenzene and the ethylvinylbenzene, was defined as the reference peak intensity. The reference peak intensity obtained from the infrared absorption spectrum of the shell material was 0.167. The reference peak intensity obtained from the infrared absorption spectrum of the polymer was 0.0869.

Next, from each infrared absorption spectrum, the peak intensity of the peak of the polymerizable unsaturated double bond (C=C) derived from the divinylbenzene and the ethylvinylbenzene was measured. The peak intensity of the peak derived from the polymerizable unsaturated double bond (C=C), which was obtained from the infrared absorption spectrum of the shell material, was 0.0725. The peak intensity of the peak derived from the polymerizable unsaturated double bond (C=C), which was obtained from the infrared absorption spectrum of the polymer, was 0.00494.

Accordingly, the ratio ($M_1/M_0$) of the peak intensity ($M_1$) of the peak derived from the polymerizable unsaturated double bond (C=C) to the reference peak intensity ($M_0$), all of which were obtained from the infrared absorption spectrum of the shell material, was 0.0725/0.167. As a result of calculation, the ratio ($M_1/M_0$) was 0.434. The ratio of ($P_1/P_0$) of the peak intensity ($P_1$) of the peak derived from the polymerizable unsaturated double bond (C=C) to the reference peak intensity ($P_0$), all of which were obtained from the infrared absorption spectrum of the polymer, was 0.00494/0.0869. As a result of calculation, the ratio ($P_1/P_0$) was 0.0568.

Then, the peak intensity ratio ($M_1/M_0$) obtained from the infrared absorption spectrum of the shell material and the peak intensity ratio ($P_1/P_0$) obtained from the infrared absorption spectrum of the polymer were applied to the following formula (A). The residual double bond ratio was calculated by the following calculation formula: $(0.0568/0.434) \times 100$. As a result, the residual double bond ratio was 13.1%.

$$\text{Residual double bond ratio (\%)} = \{(P_1/P_0) \ / \ (M_1/M_0)\} \times 100$$

Formula (A)

In Examples 2, 5 and 8 and Comparative Examples 1 to 3, the residual double bond ratio was obtained in the same manner as Example 1.

In Examples 3 and 4, in addition to divinylbenzene and ethylvinylbenzene, styrene was used as the shell material. Since the peak derived from the C-H bond of the benzene ring contained in the divinylbenzene, the peak derived from the C-H bond of the benzene ring contained in the ethylvinylbenzene, and the peak derived from the C-H bond of the benzene ring contained in the styrene appear at the same position, when obtaining the peak intensity of the reference peak from each infrared absorption spectrum, the value obtained by dividing the peak intensity of the reference peak by the total content rate (1.00 in Examples 3 and 4) of the divinylbenzene, the ethylvinylbenzene and the styrene was defined as the reference peak intensity. Also, in each infrared absorption spectrum, as the peak intensity of the peak derived from the polymerizable unsaturated double bond (C=C), the peak intensity of the peak of the polymerizable unsaturated double bond (C=C) derived from the divinylbenzene, the ethylvinylbenzene and the styrene was measured. In other respects, the same manners as those in Example 1 were used to determine the residual double bond ratio.

In Example 6, in addition to divinylbenzene and ethylvinylbenzene, polystyrene was used as the shell material. Since the peak derived from the C-H bond of the benzene ring contained in the divinylbenzene, the peak derived from the C-H bond of the benzene ring contained in the ethylvinylbenzene, and the peak derived from the C-H bond of the benzene ring contained in the polystyrene appear at the same position, when obtaining the peak intensity of the reference peak from each infrared absorption spectrum, the value obtained by dividing the peak intensity of the reference peak by the total content rate (1.00) of the divinylbenzene, the ethylvinylbenzene and the polystyrene was defined as the reference peak intensity. In other respects, the same manners as those in Example 1 were used to determine the residual double bond ratio.

In Example 7, in addition to divinylbenzene and ethylvinylbenzene, SIS was used as the shell material. Since the peak derived from the C-H bond of the benzene ring contained in the divinylbenzene, the peak derived from the C-H bond of the benzene ring contained in the ethylvinylbenzene, and the peak derived from the C-H bond of the benzene ring contained in the styrene unit contained in the SIS appear at the same position, when obtaining the peak intensity of the reference peak from each infrared absorption spectrum, the value obtained by dividing the peak intensity of the reference peak by the total content rate (0.98) of the divinylbenzene, the ethylvinylbenzene and the styrene unit in the SIS was defined as the reference peak intensity. Also, in each infrared absorption spectrum, as the peak intensity of the peak derived from the polymerizable unsaturated double bond (C=C), the peak intensity of the peak of the polymerizable unsaturated double bond (C=C) derived from the divinylbenzene, the ethylvinylbenzene and the SIS was measured. In other respects, the same manners as those in Example 1 were used to determine the residual double bond ratio.

In Comparative Example 4, in addition to divinylbenzene and ethylvinylbenzene, styrene, polystyrene (weight average molecular weight 300,000) and BLEMMER (registered trademark) 50 PEP-300 (product name, polyethylene glycol-propylene glycol monomethacrylate, manufactured by NOF Corporation) were used as the shell material. Accordingly, when obtaining the peak intensity of the reference peak from each infrared absorption spectrum, the value obtained by dividing the peak intensity of the reference peak by the total content rate (0.91) of the divinylbenzene, the ethylvinylbenzene, the styrene and the polystyrene was defined as the reference peak intensity. Also, in each infrared absorption spectrum, as the peak intensity of the peak derived from the polymerizable unsaturated double bond (C=C), the peak intensity of the peak of the polymerizable unsaturated double bond (C=C) derived from the divinylbenzene, the ethylvinylbenzene, the styrene and the polyethylene glycol-propylene glycol monomethacrylate was measured. In other respects, the same manners as those in Example 1 were used to determine the residual double bond ratio.

In Comparative Examples 5 and 6, in addition to divinylbenzene and ethylvinylbenzene, styrene was used as the shell material. Since the content was the largest, a monomer unit derived from the styrene was selected as the reference monomer unit. As the structure that does not increase or decrease before and after a polymerization reaction, the C-H bond of the benzene ring contained in the styrene was selected. For the infrared absorption spectrum of the shell material and for the infrared absorption spectrum of the polymer, the peak derived from the C-H bond of the benzene ring contained in the styrene was specified as the reference peak. When obtaining the peak intensity of the reference peak from each infrared absorption spectrum, the value obtained by dividing the peak intensity of the reference peak by the total content rate (1.00 in Comparative Examples 5 and 6) of the divinylbenzene, the ethylvinylbenzene and the styrene was defined as the reference peak intensity. Also, in each infrared absorption spectrum, as the peak intensity of the peak derived from the polymerizable unsaturated double bond (C=C), the peak intensity of the peak of the polymerizable unsaturated double bond (C=C) derived from the divinylbenzene, the ethylvinylbenzene and the styrene was measured. In other respects, the same manners as those in Example 1 were used to determine the residual double bond ratio.

4. Relative permittivity (Dk) and dielectric dissipation factor (Df)

Using a perturbation-type measuring device (manufactured by AET Inc., model: ADMS01Nc), the relative permittivity and dielectric dissipation factor of the hollow particles were measured at a frequency of 10 GHz and at room temperature (25°C).

5. Performance stability

On the hollow particles, a HAST test was carried out by use of a high accelerated stress test chamber (manufactured by ESPEC Corp.) at a temperature of 130°C and a humidity of 85% RH for 120 hours. The dielectric dissipation factor (Df) after the HAST test was measured by the same method as above. The dielectric dissipation factor of the hollow particles before the HAST test was defined as $Df_1$, and the dielectric dissipation factor of the hollow particles after the HAST test was defined as $Df_2$. Based on the difference $\delta$ between $Df_1$ and $Df_2$ ($\delta = Df_2 - Df_1$), the performance stability of the hollow particles was evaluated. It is estimated that oxidation degradation progresses as the $\delta$ increases.

(Evaluation criteria for performance stability)

A: The $\delta$ was less than 0.001.
B: The $\delta$ was 0.001 or more and less than 0.005.
C: The $\delta$ was 0.005 or more and less than 0.01.
D: The $\delta$ was 0.01 or more.

6. Circularity

A mixed solution obtained by adding 0.10 g to 0.12 g of the hollow particles to a linear alkylbenzene sulfonate aqueous solution (concentration 0.3%) was subjected to a dispersion treatment for 5 minutes by an ultrasonic cleaner, thereby preparing a measurement sample. Using a flow particle image analyzer (product name: IF-3200, manufactured by JASCO International Co., Ltd.), the circularity of each of the particles contained in the measurement sample was measured in the following measurement condition. The percentage of the particles having a circularity of 0.85 or less on a mass basis was calculated and evaluated in accordance with the following evaluation criteria.

The number of the hollow particles contained in the measurement sample increased as the particle diameter of the hollow particles decreased. However, in all of the Examples and the Comparative Examples, the number of the hollow particles in the measurement sample was in a range of from 1000 to 3000.

(Measurement conditions)

Thickness of the spacer of a flow cell: 50 $\mu$m
Telecentric zoom lens magnification: 4.5 x

Total magnification: 9.0 x
Measured amount: 0.5 mL
Image resolution: 0.185 μm/pixel
Detection algorithm: Ghost detection
Threshold: 15%

(Circularity evaluation criteria)

A: The percentage of the particles having a circularity of 0.85 or less was 3% by mass or less.
B: The percentage of the particles having a circularity of 0.85 or less was more than 3% by mass and 5% by mass or less.
C: The percentage of the particles having a circularity of 0.85 or less was more than 5% by mass and 10% by mass or less.
D: The percentage of the particles having a circularity of 0.85 or less was more than 10% by mass.

7. Varnish penetrability

First, 70 parts of epoxy resin jER (registered trademark) 828 (manufactured by Mitsubishi Chemical Corporation) and 25 parts of methyl ethyl ketone (MEK) were added to 8.4 parts of the hollow particles. The mixture thus-obtained was uniformly dispersed by use of a planetary centrifugal mixer (product name: MAZERUSTAR, manufactured by Kurabo Industries Ltd.), thereby obtaining a resin composition containing the hollow particles (a varnish containing the hollow particles). The varnish was shaken by a shaking device at 150 rpm. After the shaking, 1.5 ml of the resin composition containing the hollow particles was collected every 24 hours and centrifuged, and the varnish penetrability was evaluated by the number of days for which all of the hollow particles floated in the upper part of the resin composition and there was no precipitation. The hollow particles floating in the upper part of the resin composition when centrifuging the resin composition, means that neither the epoxy resin nor the MEK penetrates the interior of the particles.

(Varnish penetrability evaluation criteria)

A: The hollow particles floated for 30 days or more.
B: The hollow particles floated for 10 days or more and less than 30 days.
C: The hollow particles floated for less than 10 days.

<Measurement or evaluation of PPE film containing hollow particles>

8. Relative permittivity (Dk) and dielectric dissipation factor (Df)

Using a perturbation-type measuring device (manufactured by AET Inc., model: ADMS01Nc), the relative permittivity and dielectric dissipation factor of the PPE film containing the hollow particles were measured at a frequency of 10 GHz and at room temperature (25°C).

9. Particle dispersibility

The PPE film containing the hollow particles was cut in the thickness direction by a cutting machine, and the cross section was observed by SEM. In this observation, 100 of the hollow particles were randomly selected, and the presence of aggregations of the selected particles was confirmed. Based on the percentage of the particles present individually, the dispersibility of the hollow particles in the PPE film was evaluated.

(Particle dispersibility evaluation criteria)

A: All of the particles were individually present in the film.
B: The percentage of the particles individually present in the film was 50% or more and less than 100%.

C: The percentage of the particles individually present in the film was more than 10% and less than 50%.
D: The percentage of the particles individually present in the film was 10% or less.

<Evaluation of double-sided copper clad laminate containing hollow particles>

10. Performance stability

On the obtained double-sided copper clad laminate, a HAST test was carried out by use of a high accelerated stress test chamber (manufactured by ESPEC Corp.) at a temperature of 110°C and a humidity of 85% RH for 100 hours. After the HAST test, a voltage of 50 V was applied to the double-sided copper clad laminate for a predetermined period of time; the resistance value of the laminate was measured; and the presence or absence of an abnormality was confirmed and evaluated by the following evaluation criteria. The case where a change occurred in the resistance value was evaluated as "abnormal". The change in the resistance value was considered to be due to ion migration.

(Performance stability evaluation criteria)

A: No abnormality occurred even after the voltage was applied for 400 hours.
B: No abnormality occurred even after the voltage was applied for 200 hours; however, an abnormality occurred before the voltage applying time reached 400 hours.
C: No abnormality occurred even after the voltage was applied for 100 hours; however, an abnormality occurred before the voltage applying time reached 200 hours.
D: An abnormality occurred before the voltage applying time reached 100 hours.

[Reference Example 1]

A PPE film not containing the hollow particles was produced in the same manner as "2. Production of PPE film containing hollow particles" in Example 1, except that the hollow particles were not added. The relative permittivity (Dk) and dielectric dissipation factor (Df) of the obtained PPE film were measured in the same manner as for the PPE film containing the hollow particles.

[Tabe 1]

Table 1

| | | Example 1 | Example 2 | Example 3 | Example 4 | Example 5 | Example 6 | Example 7 | Example 8 |
|---|---|---|---|---|---|---|---|---|---|
| Shell material | DVB (parts) | 31.4 | 24.4 | 31.2 | 24.5 | 19.4 | 24.5 | 25.0 | 26.7 |
| | EVB (parts) | 7.3 | 14.3 | 1.3 | 1.0 | 19.4 | 1.0 | 14.0 | 6.2 |
| | ST (parts) | | | 6.2 | 13.2 | | | | |
| | PS (parts) | | | | | | 13.2 | | |
| | SIS (parts) | | | | | | | 0.8 | |
| Content (mass %) of non-crosslinkable monomer unit | | 19 | 37 | 19 | 37 | 50 | 37 | 36 | 19 |
| Hydrophobic solvent | Heptane (parts) | 61.3 | 61.3 | 61.3 | 61.3 | 61.3 | 61.3 | 61.3 | 67.1 |
| Polymerization initiator | Organic peroxide (parts) | 0.89 | 0.89 | 0.89 | 0.89 | 0.89 | 0.89 | 0.89 | 0.75 |
| Dispersion stabilizer | $Mg(OH)_2$ (parts) | 10 | 10 | 10 | 10 | 10 | 10 | 10 | 10 |
| Hollow particles | Dv ($\mu$m) | 3.2 | 2.6 | 2.8 | 3.3 | 2.5 | 3.3 | 3.5 | 3.1 |
| | Dv/Dn | 1.32 | 1.33 | 1.35 | 1.34 | 1.33 | 1.31 | 1.34 | 1.34 |
| | Particles (vol. %) having a particle diameter of less than 1.0 $\mu$m | 2.1 | 3.3 | 3.2 | 2.0 | 3.4 | 2.0 | 1.9 | 2.0 |
| | Particles (vol. %) having a particle diameter of more than 10.0 $\mu$m | 1.2 | 1.0 | 1.0 | 1.1 | 1.3 | 1.0 | 1.1 | 1.2 |
| | Void ratio (%) | 70 | 70 | 70 | 70 | 70 | 70 | 70 | 75 |
| | Residual double bond ratio (%) | 13.1 | 9.9 | 12.5 | 9.4 | 8.6 | 10.1 | 14.4 | 12.9 |
| | Dk @ 10 GHz | 1.35 | 1.33 | 1.35 | 1.34 | 1.34 | 1.32 | 1.33 | 1.28 |
| | Df @ 10 GHz | 3.82E-04 | 2.93E-04 | 3.56E-04 | 3.01E-04 | 2.20E-04 | 3.10E-04 | 3.11E-04 | 3.64E-04 |
| | Performance stability | B | A | B | A | A | A | B | B |
| | Circularity | A | A | A | B | B | A | A | A |
| | Varnish penetrability | A | A | A | A | A | A | A | A |

EP 4 582 489 A1

(continued)

|  |  | Example 1 | Example 2 | Example 3 | Example 4 | Example 5 | Example 6 | Example 7 | Example 8 |
|---|---|---|---|---|---|---|---|---|---|
| PPE film containing hollow particles | Dk @ 10 GHz | 2.20 | 2.18 | 2.19 | 2.19 | 2.18 | 2.18 | 2.18 | 2.17 |
|  | Df @ 10 GHz | 4.30E-03 | 4.26E-03 | 4.29E-03 | 4.28E-03 | 4.24E-03 | 4.27E-03 | 4.28E-03 | 4.29E-03 |
|  | Particle dispersibility | A | A | A | A | A | A | A | A |
| Double-sided copper clad laminate containing hollow particles | Performance stability | B | A | B | A | A | A | B | B |

[Table 2]

Table 2

| | | Comparative Example 1 | Comparative Example 2 | Comparative Example 3 |
|---|---|---|---|---|
| Shell material | DVB (parts) | 37.2 | 24.4 | 25.2 |
| | EVB (parts) | 1.5 | 14.3 | 1.0 |
| | ST (parts) | | | |
| | PS (parts) | | | |
| | 50PEP-300 (parts) | | | |
| Content (mass %) of non-crosslinkable monomer unit | | 4 | 37 | 4 |
| Hydrophobic solvent | Heptane (parts) | 61.3 | 61.3 | 73.4 |
| Polymerization initiator | Organic peroxide (parts) | 0.89 | | |
| | Azo compound (parts) | | 0.89 | 0.6 |
| Dispersion stabilizer | Ma(OH)$_2$ (parts) | 10 | 10 | 10 |
| | A-80 (parts) | | | |
| Hollow particles | Dv ($\mu$m) | 2.7 | 2.3 | 2.6 |
| | Dv/Dn | 1.36 | 1.41 | 1.34 |
| | Particles (vol. %) having a particle diameter of less than 1.0 $\mu$m | 5.3 | 3.5 | 1.0 |
| | Particles (vol. %) having a particle diameter of more than 10. 0 $\mu$m | 1.2 | 1.1 | 1.0 |
| | Void ratio (%) | 70 | 41 | 80 |
| | Residual double bond ratio (%) | 18.3 | 29.5 | 22.1 |
| | Dk @ 10 GHz | 1.37 | 1.51 | 1.30 |
| | Df @ 10 GHz | 5.80E-04 | 1.39E-03 | 3.00E-03 |
| | Performance stability | C | D | C |
| | Circularity | A | D | A |
| | Varnish penetrability | A | C | A |
| PPE film containing hollow particles | Dk @ 10 GHz | 2.19 | 2.24 | 2.17 |
| | Df @ 10 GHz | 4.35E-03 | 4.95E-03 | 5.09E-03 |
| | Particle dispersibility | A | B | A |
| Double-sided copper clad laminate containing hollow particles | Performance stability | C | D | C |

Table 2-continued

| | | Comparative Example 4 | Comparative Example 5 | Comparative Example 6 | Reference Example 1 |
|---|---|---|---|---|---|
| Shell material | DVB (parts) | 17.5 | 11.6 | 7.7 | |
| | EVB (parts) | 4.1 | 1.1 | 1.2 | |
| | ST (parts) | 13.5 | 26.0 | 29.7 | |
| | PS (parts) | 2.1 | | | |
| | 50PEP-300 (parts) | 3.5 | | | |
| Content (mass %) of non-crosslinkable monomer unit | | 57 | 70 | 80 | |
| Hydrophobic solvent | Heptane (parts) | 28.1 | 61.3 | 61.3 | |
| Polymerization initiator | Organic peroxide (parts) | 1.16 | 0.89 | 0.89 | |
| | Azo compound (parts) | | | | |
| Dispersion sta-bilizer | Ma(OH)$_2$ (parts) | | 10 | 10 | |
| | A-80 (parts) | 0.017 | | | |
| Hollow particles | Dv ($\mu$m) | 0.39 | 2.4 | 2.6 | |
| | Dv/Dn | | 1.39 | 1.42 | |
| | Particles (vol. %) having a particle diameter of less than 1.0 $\mu$m | 99.0 | 3.3 | 3.2 | |
| | Particles (vol. %) having a particle diameter of more than 10.0 $\mu$m | 0.0 | 1.0 | 1.0 | |
| | Void ratio (%) | 36 | 64 | 39 | |
| | Residual double bond ratio (%) | 20.1 | 15.4 | 17.5 | |
| | Dk @ 10 GHz | 1.80 | 1.43 | 1.52 | |
| | Df @ 10 GHz | 7.00E-03 | 7.87E-04 | 9.10E-04 | |
| | Performance stability | C | C | D | |
| | Circularity | C | C | D | |
| | Varnish penetrability | B | C | C | |
| PPE film containing hollow particles | Dk @ 10 GHz | 2.32 | 2.21 | 2.24 | 2.55 |
| | Df @ 10 GHz | 6.31E-03 | 4.42E-03 | 4.45E-03 | 6.01E-03 |
| | Particle dispersibility | D | B | B | |
| Double-sided copper clad la-minate contain-ing hollow par-ticles | Performance stability | D | C | D | |

Tables 1 and 2 show the amount (parts by mass) of the added materials and the measurement or evaluation results.

In Tables 1 and 2, for simplification, the dielectric dissipation factor values are expressed by using the exponent notation defined in JIS X 0210. For example, the term "3.64 × 10$^{-4}$" is expressed as "3.64E-04".

The meaning of the abbreviations shown in Tables 1 and 2 are as follows.

DVB: Divinylbenzene
EVB: Ethylvinylbenzene
ST: Styrene
PS: Polystyrene (weight average molecular weight: 300,000)
SIS: Styrene-isoprene-styrene block copolymer (product name: QUINTAC (registered trademark), manufactured by ZEON Corporation, styrene content: 24% by mass, weight average molecular weight Mw: 106,000)
50 PEP-300: Polyethylene glycol-propylene glycol monomethacrylate (product name: BLEMMER (registered trademark) 50 PEP-300, manufactured by NOF Corporation)
A-80: RAPISOL A-80 (product name, a surfactant, manufactured by NOF Corporation)

The polystyrene (PS) used in the Examples was a polystyrene not containing a polymerizable unsaturated double bond. The styrene-isoprene-styrene block copolymer (SIS) was a block copolymer not subjected to a hydrogenation reaction, and it contained a polymerizable unsaturated double bond.

[Consideration]

In Comparative Example 1, the shell material such that the content of the non-crosslinkable monomer unit was less than 15% by mass was used. Accordingly, even though the condition of the polymerization reaction for forming the shell was the same as that of the Examples, the hollow particles thus obtained had a high residual double bond ratio, a high dielectric dissipation factor and poor performance stability. In addition, the hollow particles obtained in Comparative Example 1 were less effective in decreasing the dielectric dissipation factor of the PPE film, and the double-sided copper clad laminate containing the hollow particles also had poor performance stability.

Comparative Example 2 is similar to Comparative Example 3 in Patent Document 3. Comparative Example 2 used the shell material such that the content of the non-crosslinkable monomer unit was 15% by mass or more and 60% by mass or less; however, since the polymerization reaction for forming the shell was performed at a lower temperature and for a shorter time than the Examples, the hollow particles thus obtained had a high residual double bond ratio; moreover, the hollow particles had a low void ratio due to having concaves, and the hollow particles had a high relative permittivity, a high dielectric dissipation factor and poor performance stability. In addition, the hollow particles obtained in Comparative Example 2 were less effective in decreasing the dielectric dissipation factor and permittivity of the PPE film, and the double-sided copper clad laminate containing the hollow particles also had poor performance stability. In addition, since the percentage of irregular-shaped particles having a small circularity in the hollow particles obtained in Comparative Example 2 was large, the dispersibility of the hollow particles in the resin composition was poor. In addition, the matrix resin or the solvent was likely to penetrate the interior of the hollow particles of Comparative Example 2 in the varnish. This was presumed to be because, since the polymerization reaction temperature and time were low and short, respectively, the number of parts having a low crosslink density increased, and the shell was likely to swell.

In Comparative Example 3, the shell material such that the content of the non-crosslinkable monomer unit was less than 15% by mass was used, and the polymerization reaction for forming the shell was performed at a lower temperature and for a shorter time than the Examples. Accordingly, the hollow particles thus obtained had a higher residual double bond ratio and a higher dielectric dissipation factor than the hollow particles of Comparative Example 1, and they had poor performance stability. In addition, the hollow particles obtained in Comparative Example 3 was less effective in decreasing the dielectric dissipation factor of the PPE film, and the double-sided copper clad laminate containing the hollow particles also had poor performance stability.

From a comparison between Example 2 and Comparative Example 2 and between Comparative Example 1 and Comparative Example 3, it was revealed that in the case where the content of the non-crosslinkable monomer unit was 15% by mass or more, compared to the case where the content was less than 15% by mass, the residual double bond ratio when changing the polymerization reaction temperature and time to a lower temperature and a shorter time, remarkably increased.

Comparative Example 4 is similar to Example 1 in Patent Document 2. In Comparative Example 4, the shell material such that the content of the non-crosslinkable monomer unit was 15% by mass or more and 60% by mass or less was used. However, since the polymerization reaction for forming the shell was performed at a lower temperature and for shorter time than the Examples, the hollow particles thus obtained had a high residual double bond ratio; moreover, the hollow particles had a low void ratio due to having concaves, and the hollow particles had a high relative permittivity, a high dielectric dissipation factor and poor performance stability. In addition, the hollow particles obtained in Comparative Example 4 were less effective in decreasing the dielectric dissipation factor and permittivity of the PPE film, and the double-sided copper clad laminate containing the hollow particles also had poor performance stability. In addition, since the percentage of irregular-shaped particles having a small circularity in the hollow particles obtained in Comparative Example 4 was large and since the hollow particles of Comparative Example 4 had a small volume average particle diameter, the dispersibility of the hollow particles in the resin composition was particularly poor. It was considered that due to the poor dispersibility of the hollow particles, aggregates of the hollow particles were present in the double-sided copper clad laminate containing the hollow particles of Comparative Example 4; gaps were formed at the interface between the hollow particles and the matrix resin; and water entered the gaps, thereby remarkably deteriorating the performance stability. It was also considered that since the surfactant was used as the dispersion stabilizer in Comparative Example 4, the surfactant remained in the obtained hollow particles. It was estimated that the dielectric property of the hollow particles obtained in Comparative Example 4 was also deteriorated by the influence of the residual surfactant. It was also estimated that the dielectric property and performance stability of the hollow particles obtained in Comparative Example 4 were also deteriorated since, due to the use of 50PEP-300 as the shell material, the content of a heteroatom contained in the shell was relatively large.

In Comparative Example 5 and 6, the shell material such that the content of the non-crosslinkable monomer unit was more than 60% by mass was used. Accordingly, even though the condition of the polymerization reaction for forming the shell was the same as the Examples, due to having concaves, the hollow particles thus obtained had a low void ratio. In addition, since the crosslinking reaction was less likely to proceed at the terminals, the hollow particles had a high residual double bond ratio and, as a result, a high relative permittivity, a high dielectric dissipation factor and poor performance stability. In addition, the hollow particles obtained in Comparative Examples 5 and 6 were less effective in decreasing the dielectric dissipation factor and permittivity of the PPE film. In addition, since the percentage of irregular-shaped particles having a small circularity in the hollow particles obtained in Comparative Examples 5 and 6 was large, the dispersibility of the hollow particles in the resin composition was poor. In the double-sided copper clad laminates containing the hollow particles of Comparative Examples 5 and 6, due to the poor dielectric property of the hollow particles, the performance stability deteriorated. In addition, it was considered that due to the poor dispersibility of the hollow particles, aggregates of the hollow particles were present in the double-sided copper clad laminates containing the hollow particles; gaps were formed at the interface between the hollow particles and the matrix resin; and water entered the gaps, thereby further deteriorating the performance stability. In addition, the matrix resin or the solvent was likely to penetrate the interior of the hollow particles of Comparative Examples 5 and 6 in the varnish. This was presumed to be because, since the hollow particles had concaves and since the number of poorly crosslinked parts having a low crosslink density was large, the shell was likely to swell.

Meanwhile, in the Examples, the shell material such that the content of the non-crosslinkable monomer unit was 15% by mass or more and 60% by mass or less was used, and the polymerization reaction for forming the shell was performed at a high temperature and for a long time. Accordingly, the hollow particles thus obtained had a low residual double bond ratio; they had a high void ratio since the formation of concaves was suppressed; they had a low relative permittivity and a low dielectric dissipation factor; and they had excellent performance stability. In addition, the hollow particles obtained in the Examples were very effective in decreasing dielectric dissipation factor and permittivity of the PPE film, and the double-sided copper clad laminates containing the hollow particles also had excellent performance stability.

Especially, the hollow particles of Examples 2, 4, 5 and 6, in each of which the content of the non-crosslinkable monomer unit was 35% by mass or more and the residual double bond ratio was 11.0% or less, had a low dielectric dissipation factor and excellent performance stability, and the double-sided copper clad laminates containing the hollow particles had excellent performance stability. It was presumed that the hollow particles of Example 7 had a relatively high residual double bond ratio due to the use of SIS as the shell material; however, since the content of the non-crosslinkable monomer unit was 35% by mass or more and the crosslinking reaction sufficiently proceeded at the polymer terminals, the various performances of the hollow particles of Example 7 were excellent.

In the hollow particles obtained in the Examples, the percentage of irregular-shaped particles having a small circularity was small, and the dispersibility of the hollow particles in the resin composition was excellent.

In addition, since the shell of the hollow particles obtained in the Examples was less likely to swell in the varnish, the matrix resin or the solvent was less likely to penetrate the interior of the hollow particles.

Reference Signs List

1. Aqueous medium
2. Low polarity material
3. Shell material composition droplet
4a. Hydrophobic solvent
4b. Material not containing hydrophobic solvent
5. Precursor particle
6. Shell
7. Hollow portion
10. Hollow particle in which the hollow portion is filled with gas

**Claims**

1. Hollow particles comprising a shell, which contains at least one kind of polymer, and a hollow portion surrounded by the shell,

   wherein a content of a non-crosslinkable monomer unit in 100% by mass of all monomer units forming a whole of the polymer contained in the shell, is 15% by mass or more and 60% by mass or less, and
   wherein the hollow particles have a dielectric dissipation factor of $5.00 \times 10^{-4}$ or less at a frequency of 10 GHz.

2. The hollow particles according to Claim 1, wherein a residual double bond ratio of the whole polymer contained in the shell is 15.0% or less.

3. The hollow particles according to Claim 1 or 2, wherein the shell comprises a structure derived from a polymer of a non-crosslinkable monomer.

4. The hollow particles according to Claim 3, wherein the polymer of the non-crosslinkable monomer is at least one kind of polymer selected from the group consisting of a polymer comprising an aromatic monovinyl monomer unit, and a polymer comprising an aromatic monovinyl monomer unit and a diene-based monomer unit.

5. The hollow particles according to Claim 1 or 2, wherein the hollow particles have a relative permittivity of 1.00 or more and 1.40 or less at a frequency of 10 GHz.

6. The hollow particles according to Claim 1 or 2, wherein the whole polymer contained in the shell is a hydrocarbon polymer.

7. The hollow particles according to Claim 1 or 2, wherein the hollow particles have a void ratio of 70% or more.

8. The hollow particles according to Claim 1 or 2, wherein a percentage of particles having a circularity of 0.85 or less is 5% by mass or less.

9. The hollow particles according to Claim 1 or 2, wherein the hollow particles have a volume average particle diameter of 1.0 μm or more and 10.0 μm or less.

10. The hollow particles according to Claim 1 or 2, wherein the hollow particles have a particle size distribution (volume average particle diameter (Dv) / number average particle diameter (Dn)) of 1.00 or more and 1.40 or less.

11. A resin composition comprising the hollow particles defined by any one of Claims 1 to 10 and a matrix resin.

12. A molded body comprising the hollow particles defined by any one of Claims 1 to 10 and a solidified product of a matrix resin.

[FIG. 1]

## INTERNATIONAL SEARCH REPORT

International application No.

**PCT/JP2023/026013**

### A. CLASSIFICATION OF SUBJECT MATTER

***C08L 101/00***(2006.01)i; ***C08F 2/18***(2006.01)i; ***C08F 2/44***(2006.01)i; ***C08F 212/36***(2006.01)i; ***C08K 7/22***(2006.01)i
FI:   C08L101/00; C08F212/36; C08F2/18; C08F2/44 C; C08K7/22

According to International Patent Classification (IPC) or to both national classification and IPC

### B. FIELDS SEARCHED

Minimum documentation searched (classification system followed by classification symbols)

C08L101/00; C08F2/18; C08F2/44; C08F212/36; C08K7/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/107674 A1 (ZEON CORP) 27 May 2022 (2022-05-27) | 1-12 |
| A | WO 2022/092076 A1 (ZEON CORP) 05 May 2022 (2022-05-05) | 1-12 |
| A | JP 2022-096299 A (SEKISUI PLASTICS) 29 June 2022 (2022-06-29) | 1-12 |
| P, X | WO 2023/074651 A1 (ZEON CORP) 04 May 2023 (2023-05-04)<br>claims, paragraphs [0027]-[0029], [0035], [0086], [0091]-[0092], each examples | 1, 3-12 |
| P, A | WO 2023/106307 A1 (ZEON CORP) 15 June 2023 (2023-06-15) | 1-12 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 582 489 A1

| INTERNATIONAL SEARCH REPORT | International application No. |
|---|---|
| Information on patent family members | PCT/JP2023/026013 |

| Patent document cited in search report | | | Publication date (day/month/year) | Patent family member(s) | | | Publication date (day/month/year) |
|---|---|---|---|---|---|---|---|
| WO | 2022/107674 | A1 | 27 May 2022 | TW | 202235497 | A | |
| WO | 2022/092076 | A1 | 05 May 2022 | TW | 202231349 | A | |
| JP | 2022-096299 | A | 29 June 2022 | WO | 2022/130939 | A1 | |
| | | | | TW | 202235152 | A | |
| WO | 2023/074651 | A1 | 04 May 2023 | (Family: none) | | | |
| WO | 2023/106307 | A1 | 15 June 2023 | (Family: none) | | | |

Form PCT/ISA/210 (patent family annex) (January 2015)

43

**REFERENCES CITED IN THE DESCRIPTION**

**Patent documents cited in the description**

- JP 2000313818 A
- WO 2021085189 A
- WO 2022092076 A

**Non-patent literature cited in the description**

- Chemical Society of Japan. Maruzen Publishing Co., Ltd, 30 September 1993, II-498-II-503